# EUROPEAN PATENT APPLICATION

(11) **EP 4 787 796 A1**
(43) Date of publication of application: **05.08.2026**
(21) Application number: 24872979.0
(22) Date of filing: 26.09.2024
(51) Int. Cl.: H04L 41/0893, H04L 67/12, H04W 4/38, H04W 40/24, H04W 40/22, H04W 88/04, H04W 28/02, H04W 52/02

(54) **ELECTRONIC DEVICE FOR CONTROLLING SENSOR IN WIRELESS COMMUNICATION SYSTEM AND OPERATION METHOD THEREOF**

(30) Priority: 27.09.2023 KR 20230130969; 27.09.2023 KR 20230130971; 27.09.2023 KR 20230130974; 27.09.2023 KR 20230130976
(71) Applicant: Industry-Academic Cooperation Foundation Dankook University, Yongin-si, Gyeonggi-do 16890 (KR)
(72) Inventor: CHOI, Su Han, Gwacheon-si, Gyeonggi-do 13839 (KR)
(74) Representative: Jung, Minkyu
(86) International application number: PCT/KR2024/014619
(87) International publication number: WO 2025/071271

(57) **Abstract**

An operating method of an electronic device for controlling a sensor in a wireless communication system according to an embodiment of the present disclosure includes a step of transmitting sensing configuration information to at least one sensor, a step of transmitting sensing control information to the at least one sensor, and a step of receiving sensing information collected based on the sensing configuration information and the sensing control information from the at least one sensor.

## Description

### TECHNICAL FIELD

The present disclosure relates to an electronic device for controlling a sensor in a wireless communication system and an operating method thereof.

### BACKGROUND ART

Along with the development of information and communication technology, various mobile communication technologies may be developed. Representative mobile communication technologies include 4G (4th Generation) LTE (Long Term Evolution), 5G NR (New Radio), 6G, and the like. LTE is 3GPP (Generation Partnership Project) 4G mobile communication technology, and 5G NR is 3GPP 5G (5th Generation) mobile communication Radio Access technology.

In order to handle the rapidly increasing wireless data after the commercialization of 4G communication systems (e.g., communication systems supporting LTE), the use of not only the frequency band of 4G communication systems (e.g., frequency band below 6 GHz) but also higher frequency bands than the frequency band of 4G communication systems (e.g., frequency band of 6 GHz or above) by 5G communication systems (e.g., communication systems supporting NR) may be considered. The 5G communication systems may support eMBB (enhanced Mobile BroadBand), URLLC (Ultra-Reliable and Low Latency Communication), and mMTC (massive Machine Type Communication).

A 6G (mobile communication) system aims at (i) a very high data rate per device, (ii) a very large number of connected devices, (iii) global connectivity, (iv) very low latency, (v) reducing energy consumption of battery-free IoT devices, (vi) ultra-reliable connections, and (vii) connected intelligence having machine learning capabilities. The usage scenarios of a 6G system may be six aspects including Immersive Communication, Hyper Reliable & Low-Latency Communication, Massive Communication, Ubiquitous Connectivity, Integrated AI and Communication, and Integrated Sensing and Communication (ISAC).

### DISCLOSURE OF THE INVENTION

### Technical Problem

An embodiment of the present disclosure proposes a method for controlling a sensor in a wireless communication system.

An embodiment of the present disclosure proposes a method for transmitting a configuration of a sensor and control information of the sensor, and receiving sensing information, in a wireless communication system.

An embodiment of the present disclosure proposes a method for setting a quality of service by considering characteristics of sensing information in a wireless communication system.

An embodiment of the present disclosure proposes a method for transmitting and receiving information related to sensing by using multi-hop relay of sensors in a wireless communication system.

An embodiment of the present disclosure proposes a method for grouping sensors and controlling the sensors on a group basis in a wireless communication system.

An embodiment of the present disclosure proposes an electronic device and an operating method thereof for controlling an operating state of a sensor in a wireless communication system.

An embodiment of the present disclosure proposes an electronic device and an operating method thereof for controlling a sensor by using relay in a wireless communication system.

An embodiment of the present disclosure proposes an electronic device and an operating method thereof for controlling a sensor group in a wireless communication system.

### Technical Solution

An operating method of an electronic device for controlling a sensor in a wireless communication system according to an embodiment of the present disclosure includes a step of transmitting sensing configuration information to at least one sensor, a step of transmitting sensing control information to the at least one sensor, and a step of receiving sensing information collected based on the sensing configuration information and the sensing control information from the at least one sensor.

An operating method of an electronic device for controlling an operating state of a sensor in a wireless communication system according to an embodiment of the present disclosure includes a step of transmitting sensing information quality of service value information per type to at least one sensor, a step of transmitting control information related to an operating state to the at least one sensor, and a step of receiving sensing information from the at least one sensor based on the service quality value information and the control information related to the operating state.

An operating method of an electronic device for controlling a sensor in a wireless communication system according to an embodiment of the present disclosure includes a step of transmitting sensing relay configuration information to at least one sensor, a step of transmitting sensing relay control information to the at least one sensor, and a step of receiving sensing information from the at least one sensor based on at least one of the sensing relay configuration information and the sensing relay control information.

An operating method of an electronic device for controlling a sensor in a wireless communication system according to an embodiment of the present disclosure includes a step of configuring a sensor group including at least one sensor, a step of generating group sensing related information for sensing of the configured sensor group, and a step of transmitting the generated group sensing related information to at least one sensor within the sensor group.

### Advantageous Effects of the Invention

According to an embodiment of the present disclosure, a base station communicates directly with sensors or communicates with sensors through a master sensor, and provides configuration information and control information related to sensing to the sensors, thereby efficiently controlling sensing of the sensors and collecting and utilizing sensing information.

According to an embodiment of the present disclosure, a base station sets a service quality value per sensing information type based on characteristics of sensing information, controls operating states of sensors, efficiently controls the operating states for sensing information, and collects sensing information satisfying service quality from the sensors.

According to an embodiment of the present disclosure, a base station transmits configuration and control information for sensing by using a multi-hop relay function, and receives sensing information, thereby efficiently controlling sensing of remote sensors.

According to an embodiment of the present disclosure, in an Integrated Sensing and Communication (ISAC) system, a sensor network topology is configured, sensors grouped according to the configured topology are controlled, and sensing of the sensors and collection of sensing information may be efficiently performed.

The effects obtainable through specific examples of the present specification are not limited to the effects listed above. For example, a person having ordinary skill in the related art may understand or derive various technical effects from the present specification. Accordingly, specific effects of the present specification are not limited to those explicitly described in the present specification, and may include various effects that may be understood or derived from the technical features of the present specification.

### BRIEF DESCRIPTION OF THE DRAWINGS

The following drawings have been prepared to describe specific examples of the present specification. Since the specific names of devices or the specific names of signals/messages/fields described in the drawings are presented by way of example, the technical features of the present specification are not limited to the specific names used in the following drawings.
FIG. 1 is a diagram illustrating an example of a communication system applicable to embodiments of the present disclosure.
FIG. 2 is a diagram illustrating an example of a wireless device applicable to embodiments of the present disclosure.
FIG. 3 is a diagram illustrating another example of a wireless device applicable to embodiments of the present disclosure.
FIG. 4 is a diagram illustrating an example of a terminal applicable to embodiments of the present disclosure.
FIG. 5 is a diagram illustrating an example of a communication structure that may be provided by a 6G system applicable to embodiments of the present disclosure.
FIG. 6 is a diagram illustrating an example of performing control of sensors according to a first embodiment of the present disclosure.
FIG. 7 is a diagram illustrating an example of performing control of sensors in a sidelink-based sensor network according to a second embodiment of the present disclosure.
FIG. 8 is a diagram illustrating a sensor network having a multi-hop relay function according to a fourth embodiment of the present disclosure.
FIG. 9 is a diagram illustrating an example of a topology of a sensor network for ISAC according to a fifth embodiment of the present disclosure.
FIG. 10 is a diagram illustrating a configuration of a sensor device according to embodiments of the present disclosure.
FIG. 11 is a diagram illustrating a configuration of a base station device according to embodiments of the present disclosure.
FIG. 12 is a diagram illustrating an operation of a base station device according to a first embodiment of the present disclosure.
FIG. 13 is a diagram illustrating an operation of a sensor device according to a first embodiment of the present disclosure.
FIG. 14 is a diagram illustrating an operation of a base station device according to a second embodiment of the present disclosure.
FIG. 15 is a diagram illustrating an operation of a master sensor device according to a second embodiment of the present disclosure.
FIG. 16 is a diagram illustrating an operation of a slave sensor device according to a second embodiment of the present disclosure.
FIG. 17 is a diagram illustrating an operation of a base station device according to a third embodiment of the present disclosure.
FIG. 18 is a diagram illustrating an operation of a sensor device according to a third embodiment of the present disclosure.
FIG. 19 is a diagram illustrating an operation of a base station device according to a fourth embodiment of the present disclosure.
FIG. 20 is a diagram illustrating an operation of a sensor device according to a fourth embodiment of the present disclosure.
FIG. 21 is a diagram illustrating an operation of a base station device according to a fifth embodiment of the present disclosure.
FIG. 22 is a diagram illustrating an operation of a sensor device according to a fifth embodiment of the present disclosure.

### DETAILED DESCRIPTION OF THE EMBODIMENTS

The present disclosure may be modified in various ways and may have several embodiments, and specific embodiments are illustrated in drawings and described in detail. However, this is not intended to limit the present disclosure to a particular embodiment, and it should be understood that all changes, equivalents, and substitutes included in the scope of the idea and technology of the present disclosure are included. Similar reference numerals have been used for similar components in describing each drawing.

In the present specification, terms such as "first", "second", "A", "B" may be used to describe various components, but the components should not be limited by the terms. The terms are only used for the purpose of distinguishing one component from another component. For example, without departing from the scope of the present disclosure, a first component may be named a second component, and similarly, a second component may also be named a first component. Also, the term "and/or" includes a combination of a plurality of related items or any one of a plurality of related items.

When a component is referred to as being "connected" to or "in contact with" another component, it should be understood that the component may be directly connected to or in contact with the other component, but other components may also exist in between. On the other hand, when a component is referred to as being "directly connected" to or "directly in contact with" another component, it should be understood that no other component exists in between.

The terminology used in the present specification is used only for describing specific embodiments and is not intended to limit the present disclosure. Singular expressions include plural expressions unless clearly meant otherwise in context. In the present specification, terms such as "includes", "comprises" or "has/have" should be understood to designate that a feature, number, step, action, component, part, or combination thereof described in the specification exists, and do not preclude the possible existence or addition of one or more other features, numbers, steps, actions, components, parts, or combinations thereof.

Unless otherwise defined, all terms used herein, including technical or scientific terms, have the same meaning as commonly understood by a person having ordinary skill in the art to which the present disclosure belongs. Terms commonly used as defined in dictionaries should be interpreted as having a meaning consistent with the contextual meaning of the related technology, and should not be interpreted in an idealistic or excessively formal sense unless explicitly defined in the present specification.

Prior to the detailed description with reference to the drawings, in order to clearly clarify the components of the present specification, a section in which each component is responsible is not divided by main function. That is, two or more of the components to be described below may be combined into one component, or one component may be divided into two or more sub-functions and configured accordingly.

In addition, each component to be described below may additionally perform all or some of the functions that are handled by other components in addition to the main function that the component is responsible for, and some of the main functions of each component may be exclusively performed by other components. Therefore, the existence of each component described in the present specification should be interpreted functionally.

In the present specification, "A or B (A or B)" may mean "only A", "only B", or "both A and B". In other words, in the present specification, "A or B (A or B)" may be interpreted as "A and/or B (A and/or B)". For example, in the present specification, "A, B, or C (A, B, or C)" may mean "only A", "only B", "only C", or "any combination of A, B, and C (any combination of A, B and C)".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B (at least one of A and B)" may mean "only A", "only B", or "both A and B". Also, in the present specification, "at least one of A or B" or "at least one of A and/or B (at least one of A and/or B)" may be interpreted as the same as "at least one of A and B (at least one of A and B)".

Also, in the present specification, "at least one of A, B, and C (at least one of A, B and C)" may mean "only A", "only B", "only C", or "any combination of A, B, and C (any combination of A, B and C)". Also, "at least one of A, B, or C (at least one of A, B or C)" or "at least one of A, B, and/or C (at least one of A, B and/or C)" may mean "at least one of A, B, and C (at least one of A, B and C)".

Hereinafter, preferred embodiments according to the present disclosure will be described in detail with reference to the attached drawings.

Hereinafter, a communication system applicable to the present disclosure will be described.

Although not limited thereto, the various descriptions, functions, procedures, proposals, methods, and/or operational flowcharts disclosed in the present document may be applied to various fields requiring wireless communication/connection (e.g., 5G) between devices.

Hereinafter, description will be given in more detail with reference to the drawings. In the following drawings/description, the same reference numerals may refer to the same or corresponding hardware blocks, software blocks, or functional blocks unless otherwise noted.

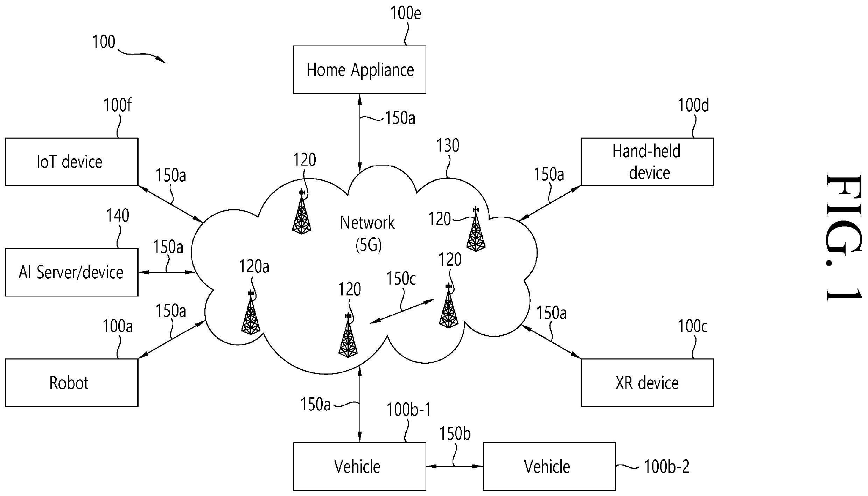

FIG. 1 is a diagram illustrating an example of a communication system applicable to the present disclosure.

Referring to FIG. 1, a communication system (100) applicable to the present disclosure includes a wireless device, a base station, and a network. Here, the wireless device refers to a device that performs communication using a wireless access technology (e.g., 5G NR, LTE E-UTRA (Enhanced-Universal Terrestrial Radio Access), 6G RAT (Radio Access Technology)) and may be referred to as a communication/wireless/5G device. Although not limited thereto, the wireless device may include a robot (100a), a vehicle (100b-1, 100b-2), an XR (extended reality) device (100c), a hand-held device (100d), a home appliance (100e), an IoT (Internet of Thing) device (100f), and an AI (artificial intelligence) device/server (100g).

For example, the vehicle may include a vehicle equipped with a wireless communication function, an autonomous driving vehicle, a vehicle capable of performing vehicle-to-vehicle communication, and the like. Here, the vehicle (100b-1, 100b-2) may include a UAV (unmanned aerial vehicle) (e.g., a drone). The XR device (100c) includes an AR (augmented reality)/VR (virtual reality)/MR (mixed reality) device and may be implemented in the form of an HMD (head-mounted device), a HUD (head-up display) equipped in a vehicle, a television, a smartphone, a computer, a wearable device, a home appliance, a digital signage, a vehicle, a robot, and the like. The hand-held device (100d) may include a smartphone, a smart pad, a wearable device (e.g., a smart watch, smart glasses), a computer (e.g., a notebook, etc.), and the like. The home appliance (100e) may include a TV, a refrigerator, a washing machine, and the like. The IoT device (100f) may include a sensor, a smart meter, and the like. For example, a base station (120), a network (130) may also be implemented as a wireless device, and a specific wireless device (120a) may operate as a base station/network node for other wireless devices.

The wireless devices (100a to 100f) may be connected to a base station (120) through a network (130). AI technology may be applied to the wireless devices (100a to 100f), and the wireless devices (100a to 100f) may be connected to an AI server (100g) through the network (130). The network (130) may be configured using a 3G network (e.g., 3GPP LTE), a 5G network (e.g., 3GPP 5G), or the like. The wireless devices (100a to 100f) may communicate with each other through the base station (120)/network (130), but may also communicate directly (e.g., sidelink communication) without going through the base station (120)/network (130). For example, vehicles (100b-1, 100b-2) may perform direct communication (e.g., V2V (vehicle to vehicle)/V2X (vehicle to everything) communication). Also, the IoT device (100f) (e.g., a sensor) may directly communicate with other wireless devices (100a to 100f) or other IoT devices.

Wireless communication/connection (150a, 150b, 150c) may be established between the wireless devices (100a to 100f)/base station (120), the base station (120)/base station (120), and the base station (120)/base station (120). Here, the wireless communication/connection may be established through various wireless access technologies (e.g., 5G NR) such as uplink/downlink communication (150a), sidelink communication (150b) (or D2D communication), and inter-base station communication (150c) (e.g., relay, IAB (integrated access backhaul)). Through the wireless communication/connection (150a, 150b, 150c), the wireless device and the base station/wireless device, and the base station and the base station may transmit/receive wireless signals to/from each other. For example, the wireless communication/connection (150a, 150b, 150c) may transmit/receive signals through various physical channels. To this end, based on the various proposals of the present disclosure, at least some of various configuration information setting processes, various signal processing processes (e.g., channel encoding/decoding, modulation/demodulation, resource mapping/demapping), resource allocation processes, and the like for transmission/reception of wireless signals may be performed.

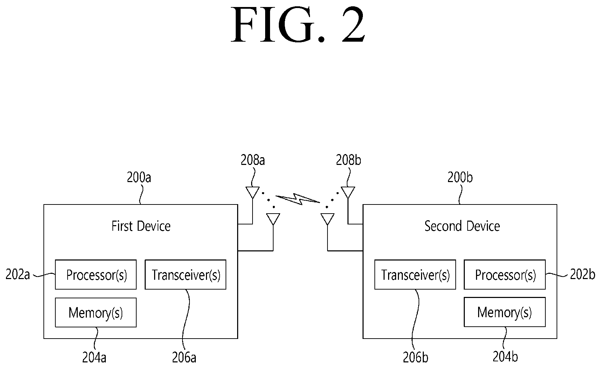

FIG. 2 is a diagram illustrating an example of a wireless device applicable to the present disclosure.

Referring to FIG. 2, a first wireless device (200a) and a second wireless device (200b) may transmit and receive wireless signals through various wireless access technologies (e.g., LTE E-UTRA, 5G NR, 6G RAT (Radio Access Technology)). Here, {the first wireless device (200a), the second wireless device (200b)} may correspond to {the wireless device (100x), the base station (120)} and/or {the wireless device (100x), the wireless device (100x)} of FIG. 1.

The first wireless device (200a) includes one or more processors (202a) and one or more memories (204a), and may further include one or more transceivers (206a) and/or one or more antennas (208a). The processor (202a) controls the memory (204a) and/or the transceiver (206a) and may be configured to implement the descriptions, functions, procedures, proposals, methods, and/or operational flowcharts disclosed in the present document. For example, the processor (202a) may process information within the memory (204a) to generate first information/signal, and then transmit a wireless signal including the first information/signal through the transceiver (206a). Also, the processor (202a) may receive a wireless signal including second information/signal through the transceiver (206a) and then store information obtained from signal processing of the second information/signal in the memory (204a). The memory (204a) may be connected to the processor (202a) and may store various information related to the operation of the processor (202a). For example, the memory (204a) may store software code including instructions for performing all or part of the processes controlled by the processor (202a), or for performing the descriptions, functions, procedures, proposals, methods, and/or operational flowcharts disclosed in the present document. Here, the processor (202a) and the memory (204a) may be part of a communication modem/circuit/chip designed to implement wireless communication technology (e.g., LTE E-UTRA, 5G NR, 6G Radio Access Technology). The transceiver (206a) may be connected to the processor (202a) and may transmit and/or receive wireless signals through one or more antennas (208a). The transceiver (206a) may include a transmitter and/or a receiver. The transceiver (206a) may be interchangeably used with an RF (radio frequency) unit. In the present disclosure, the wireless device may refer to a communication modem/circuit/chip.

The second wireless device (200b) includes one or more processors (202b), one or more memories (204b), and may further include one or more transceivers (206b) and/or one or more antennas (208b). The processor (202b) controls the memory (204b) and/or the transceiver (206b) and may be configured to implement the descriptions, functions, procedures, proposals, methods, and/or operational flowcharts disclosed in the present document. For example, the processor (202b) may process information within the memory (204b) to generate third information/signal, and then transmit a wireless signal including the third information/signal through the transceiver (206b). Also, the processor (202b) may receive a wireless signal including fourth information/signal through the transceiver (206b) and then store information obtained from signal processing of the fourth information/signal in the memory (204b). The memory (204b) may be connected to the processor (202b) and may store various information related to the operation of the processor (202b). For example, the memory (204b) may store software code including instructions for performing all or part of the processes controlled by the processor (202b), or for performing the descriptions, functions, procedures, proposals, methods, and/or operational flowcharts disclosed in the present document. Here, the processor (202b) and the memory (204b) may be part of a communication modem/circuit/chip designed to implement wireless communication technology (e.g., LTE E-UTRA, 5G NR, 6G Radio Access Technology). The transceiver (206b) may be connected to the processor (202b) and may transmit and/or receive wireless signals through one or more antennas (208b). The transceiver (206b) may include a transmitter and/or a receiver. The transceiver (206b) may be interchangeably used with an RF unit. In the present disclosure, the wireless device may refer to a communication modem/circuit/chip.

Hereinafter, the hardware elements of the wireless devices (200a, 200b) will be described in more detail. Although not limited thereto, one or more protocol layers may be implemented by one or more processors (202a, 202b). For example, one or more processors (202a, 202b) may implement one or more layers (e.g., functional layers such as PHY (physical), MAC (media access control), RLC (radio link control), PDCP (packet data convergence protocol), SDAP (service data adaptation protocol), and RRC (radio resource control)).

One or more processors (202a, 202b) may be referred to as a controller, a microcontroller, a microprocessor, or a microcomputer. One or more processors (202a, 202b) may be implemented by hardware, firmware, software, or a combination thereof. As an example, one or more ASICs (application specific integrated circuits), one or more DSPs (digital signal processors), one or more DSPDs (digital signal processing devices), one or more PLDs (programmable logic devices), or one or more FPGAs (field programmable gate arrays) may be included in one or more processors (202a, 202b). The descriptions, functions, procedures, proposals, methods, and/or operational flowcharts disclosed in the present document may be implemented using firmware or software, and the firmware or software may be implemented to include modules, procedures, functions, and the like. Firmware or software configured to perform the descriptions, functions, procedures, proposals, methods, and/or operational flowcharts disclosed in the present document may be included in one or more processors (202a, 202b) or stored in one or more memories (204a, 204b) and driven by one or more processors (202a, 202b). The descriptions, functions, procedures, proposals, methods, and/or operational flowcharts disclosed in the present document may be implemented using firmware or software in the form of code, instructions, and/or a set of instructions.

One or more memories (204a, 204b) may be connected to one or more processors (202a, 202b) and may store data, signals, information, programs, codes, instructions, and/or commands in various forms. One or more memories (204a, 204b) may include ROM (read only memory), RAM (random access memory), EPROM (erasable programmable read only memory), flash memory, hard drives, registers, cache memory, computer readable storage media, and/or combinations thereof. One or more memories (204a, 204b) may be located inside and/or outside of one or more processors (202a, 202b). Also, one or more memories (204a, 204b) may be connected to one or more processors (202a, 202b) through various technologies such as wired or wireless connection.

One or more transceivers (206a, 206b) may transmit user data, control information, wireless signals/channels, and the like mentioned in the methods and/or operational flowcharts of the present document to one or more other devices. One or more transceivers (206a, 206b) may receive user data, control information, wireless signals/channels, and the like mentioned in the descriptions, functions, procedures, proposals, methods, and/or operational flowcharts of the present document from one or more other devices. For example, one or more transceivers (206a, 206b) may be connected to one or more processors (202a, 202b) and may transmit and receive wireless signals. For example, one or more processors (202a, 202b) may control one or more transceivers (206a, 206b) to transmit user data, control information, or wireless signals to one or more other devices. Also, one or more processors (202a, 202b) may control one or more transceivers (206a, 206b) to receive user data, control information, or wireless signals from one or more other devices. Also, one or more transceivers (206a, 206b) may be connected to one or more antennas (208a, 208b), and one or more transceivers (206a, 206b) may be configured to transmit and receive user data, control information, wireless signals/channels, and the like mentioned in the descriptions, functions, procedures, proposals, methods, and/or operational flowcharts of the present document through one or more antennas (208a, 208b). In the present document, one or more antennas may be a plurality of physical antennas or a plurality of logical antennas (e.g., antenna ports). One or more transceivers (206a, 206b) may convert the received wireless signals/channels from RF band signals to baseband signals for processing using one or more processors (202a, 202b), and may convert the received wireless signals/channels. One or more transceivers (206a, 206b) may convert user data, control information, wireless signals/channels, and the like processed by one or more processors (202a, 202b) from baseband signals to RF band signals. To this end, one or more transceivers (206a, 206b) may include (analog) oscillators and/or filters.

Hereinafter, a wireless device structure applicable to the present disclosure will be described.

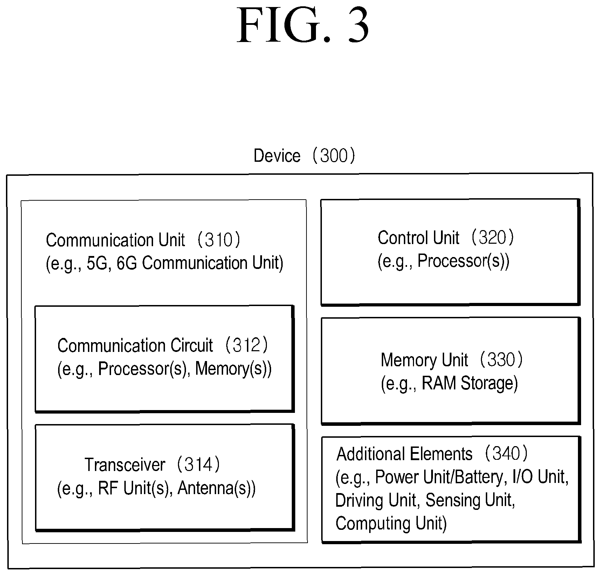

FIG. 3 is a diagram illustrating another example of a wireless device applicable to the present disclosure.

Referring to FIG. 3, a wireless device (300) corresponds to the wireless devices (200a, 200b) of FIG. 2 and may be configured with various elements, components, units/parts, and/or modules. For example, the wireless device (300) may include a communication unit (310), a control unit (320), a memory unit (330), and additional elements (340).

The communication unit (310) may include a communication circuit (312) and a transceiver(s) (314). For example, the communication circuit (312) may include one or more processors (202a, 202b) and/or one or more memories (204a, 204b) of FIG. 2. For example, the transceiver(s) (314) may include one or more transceivers (206a, 206b) and/or one or more antennas (208a, 208b) of FIG. 2.

The control unit (320) is electrically connected to the communication unit (310), the memory unit (330), and the additional elements (340) and controls overall operations of the wireless device. For example, the control unit (320) may control electrical/mechanical operations of the wireless device based on programs/codes/instructions/information stored in the memory unit (330).

The control unit (320) may be configured in the form of a System on Chip (SoC). Although not shown, the control unit (320) configured as a SoC may include a CPU (Central Processor Unit), a GPU (Graphic Processor Unit), an NPU (Neural Processor Unit), an ISP (Image Signal Processor), and the like.

The CPU handles the brain function of the mobile device, performing operating systems and various applications, and controlling the operations of the components of the wireless device (300) to maintain performance and power efficiency. The GPU is responsible for 2D (Dimension) and 3D graphics-related computations and can provide smooth and clear graphical representation on high-resolution displays. The NPU accelerates artificial neural network computations and efficiently processes AI and machine learning operations. The ISP is an image signal processing device that converts analog signals input from image sensors into digital images and performs various image processing tasks.

The additional elements (340) may be variously configured according to the type of the wireless device. For example, the additional elements (340) may include at least one of a power unit/battery, an input/output unit, a driving unit, a sensor, a computing unit, and the like. The sensor may be, for example, a temperature sensor, a pressure sensor, a humidity sensor, a light sensor, a speed sensor, a direction sensor, a sound pressure sensor, a sound-sensing sensor, a carbon dioxide-sensing sensor, a VOC (Volatile Organic Compounds) sensor, a fire detection sensor, a smoke detection sensor, and the like. Also, the sensor may be an accelerometer, a gyroscope, a proximity sensor, a GPS (Global Positioning System) within the terminal, or a channel sensor for measuring the state of a wireless channel.

Although not limited thereto, the wireless device (300) may be implemented in the form of a robot (FIG. 1, 100a), a vehicle (FIG. 1, 100b-1, 100b-2), an XR device (FIG. 1, 100c), a hand-held device (FIG. 1, 100d), a home appliance (FIG. 1, 100e), an IoT device (FIG. 1, 100f), a digital broadcasting terminal, a hologram device, a public safety device, an MTC device, a medical device, a FinTech device (or a financial device), a security device, a climate/environmental device, an AI server/device (FIG. 1, 140), a base station (FIG. 1, 120), a network node, and the like. The wireless device may be used in a mobile or fixed location depending on the use case/service.

In FIG. 3, the various elements, components, units/parts, and/or modules within the wireless device (300) may be interconnected through a wired interface, or at least a part may be connected wirelessly through the communication unit (310). For example, within the wireless device (300), the control unit (320) and the communication unit (310) are connected by wire, and the control unit (320) and a first unit (e.g., 130, 140) may be connected wirelessly through the communication unit (310). Also, each element, component, unit/part, and/or module within the wireless device (300) may further include one or more elements. For example, the control unit (320) may be configured with a set of one or more processors. For example, the control unit (320) may be configured with a set of a communication control processor, an application processor, an ECU (electronic control unit), a graphics processing processor, a memory control processor, and the like. As another example, the memory unit (330) may be configured with a combination of RAM, DRAM (dynamic RAM), ROM, flash memory, volatile memory, non-volatile memory, and/or the like.

Hereinafter, a terminal applicable to the present disclosure will be described.

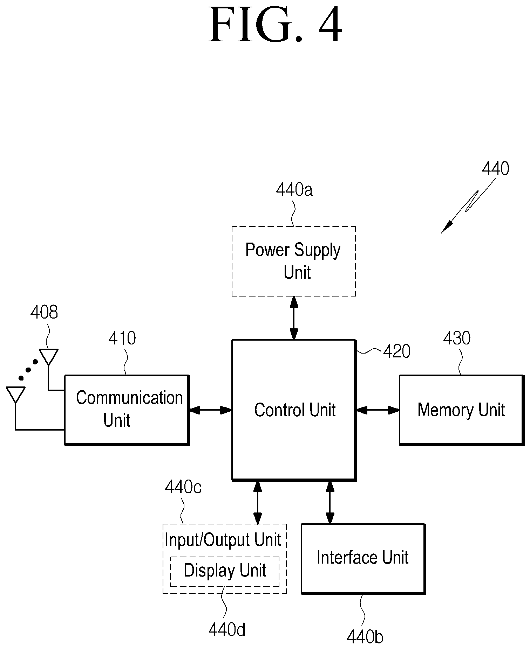

FIG. 4 is a diagram illustrating an example of a terminal applicable to the present disclosure.

FIG. 4 illustrates an example of a terminal. The terminal may include a smartphone, a smart pad, a wearable device (e.g., a smart watch, smart glasses), a portable computer (e.g., a notebook, etc.), and various types of sensors. The sensor may be, for example, a temperature sensor, a pressure sensor, a humidity sensor, a light sensor, a speed sensor, a direction sensor, a sound pressure sensor, a sound-sensing sensor, a carbon dioxide-sensing sensor, a VOC (Volatile Organic Compounds) sensor, a fire detection sensor, a smoke detection sensor, and the like. Also, the sensor may be an accelerometer, a gyroscope, a proximity sensor, a GPS (Global Positioning System), or a channel sensor for measuring the state of a wireless channel.

The terminal may be referred to as an MS (mobile station), a UT (user terminal), an MSS (mobile subscriber station), an SS (subscriber station), an AMS (advanced mobile station), or a WT (wireless terminal), or a sensor.

Referring to FIG. 4, the terminal (400) may include an antenna unit (408), a communication unit (410), a control unit (420), a memory unit (430), a power supply unit (440a), an interface unit (440b), and an input/output unit (440c). Blocks 410 to 430/440a to 440c correspond to blocks 310 to 330/340 of FIG. 3, respectively.

The communication unit (410) may transmit and receive signals (e.g., data, control signals, etc.) with other wireless devices and base stations.

The control unit (420) may control components of the terminal (400) to perform various operations. The control unit (420) may be configured in the form of a System on Chip (SoC), and may include processors such as a CPU (Central Processor Unit), a GPU (Graphic Processor Unit), an NPU (Neural Processor Unit), and an ISP (Image Signal Processor). The CPU processes operating systems and various applications, and controls the operations of the components of the terminal (400) to maintain performance and power efficiency. The GPU is responsible for 2D (Dimension) and 3D graphics-related computations and can provide smooth and clear graphical representation on high-resolution displays. The NPU accelerates artificial neural network computations and efficiently processes Artificial Intelligence (AI)/Machine Learning (ML) operations. The ISP is an image signal processing device that converts analog signals input from image sensors into digital images and performs various image processing tasks.

The memory unit (430) may store data/parameters/programs/codes/instructions necessary for operation of the terminal (400). Also, the memory unit (430) may store input/output data/information and the like.

For example, in the case of data communication, the input/output unit (440c) acquires information/signals (e.g., touch, text, voice, image, video) input from a user, and the acquired information/signals may be stored in the memory unit (430). The communication unit (410) may convert the information/signals stored in the memory into wireless signals and directly transmit the converted wireless signals to another wireless device or transmit them to a base station. Also, the communication unit (410) may receive wireless signals from another wireless device or a base station and then restore the received wireless signals to the original information/signals. The restored information/signals may be stored in the memory unit (430) and then output in various forms (e.g., text, voice, image, video, haptic) through the input/output unit (440c).

Hereinafter, a 6G communication system will be described.

A 6G (mobile communication) system aims at (i) a very high data rate per device, (ii) a very large number of connected devices, (iii) global connectivity, (iv) very low latency, (v) reducing energy consumption of battery-free IoT devices, (vi) ultra-reliable connections, and (vii) connected intelligence having machine learning capabilities. The usage scenarios of a 6G system may be six aspects including Immersive Communication, Hyper Reliable & Low-Latency Communication, Massive Communication, Ubiquitous Connectivity, Integrated AI and Communication, and Integrated Sensing and Communication (ISAC).

Four design principles commonly applied to the six usage scenarios of 6G are the four overarching aspects of "Sustainability", "Connecting the unconnected", "Ubiquitous intelligence", and "Security/Privacy/Resilience".

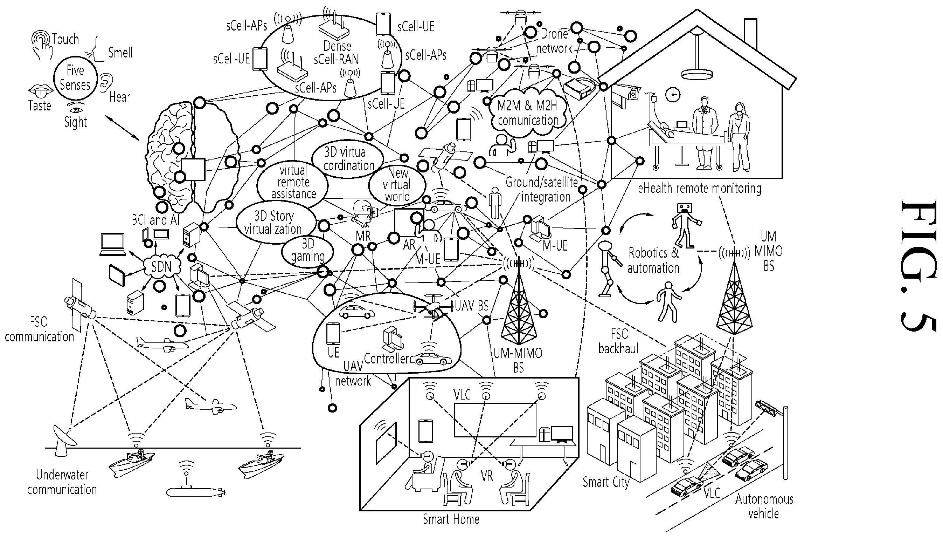

FIG. 5 is a diagram illustrating an example of a communication structure that may be provided by a 6G system applicable to the present disclosure.

Referring to FIG. 5, the 6G system is expected to have higher simultaneous wireless connectivity than 5G wireless communication systems (e.g., 10 times). The key feature of 5G, URLLC, is expected to become a more important technology as 6G communication provides an air-interface delay of less than 1 ms or approximately 0.1 ms. At this point, the 6G system will use a spectral efficiency in the area spectrum efficiency, which is far superior to the spectral efficiency in the frequency spectrum efficiency unlike 5G. The 6G system may provide advanced battery technology for very long battery life and energy harvesting, and in the 6G system, mobile devices may not need to be charged separately. In addition, currently discussed new network characteristics of 6G may be as follows.
- Satellite integrated network: To provide global mobile coverage, 6G is expected to be integrated with satellites. The integration of terrestrial, satellite, and public networks into a single wireless system will be very important for 6G.
- Connected intelligence: Unlike previous generations of wireless communication systems, 6G is revolutionary, and the evolution of wireless will be upgraded from "connected things" to "connected intelligence". AI may be applied at each stage (or each step of the signal processing to be described later) of the communication procedure.
- Seamless integration of wireless information and energy transfer: The 6G wireless network will integrate wireless information and energy transfer (WIET) to charge batteries of devices such as smartphones and sensors.
- Ubiquitous super 3D connectivity: Access to drones and very low earth orbit satellite networks and core network functions at 6G will create super 3D connectivity in ubiquitous space.

Some general requirements from the above new network characteristics of 6G may be as follows.
- Small cell networks: The concept of small cell networks in cellular systems was introduced to improve throughput, energy efficiency, and spectral efficiency, resulting in improved received signal quality. Consequently, small cell networks are an essential feature of communication systems beyond 5G (5GB) and above. Therefore, 6G communication systems also adopt small cell network characteristics.
- Ultra-dense heterogeneous networks: Ultra-dense heterogeneous networks will be another important feature of 6G communication systems. A heterogeneous network composed of multi-tier networks improves overall QoS and reduces costs.
- High-capacity backhaul: Backhaul connections support high-capacity traffic. High-capacity backhaul networks are characterized by high-speed fiber optic and free-space optical (FSO) systems, which may be a possible solution for this issue.
- Mobile technology and integrated radar technology: High-precision localization (or location-based services) through communication is one of the functions of 6G mobile communication systems. Therefore, radar systems will be integrated with 6G networks.
- Softwarization and virtualization: Softwarization and virtualization are two important functions designed at the basis of the 5GB network design process to ensure flexibility, reconfigurability, and programmability. Also, shared physical infrastructure may be shared among tens of billions of devices.

The above descriptions may be applied to the embodiments of the present disclosure.

Meanwhile, prior to the detailed description of the embodiments of the present disclosure, 'wireless sensing' and 'Integrated Sensing And Communication (ISAC)' related to the embodiments of the present disclosure will be described.

Wireless sensing technology includes object detection, distance measurement, location tracking, imaging, and the like, and has long been a technology developed independently in parallel with IMT (international mobile telecommunication) systems. The location service is the only sensing service provided in the IMT-2020 system. Instead of the traditional approach of designing wireless networks solely for communication purposes, starting from after 2030, IMT will consider integrated sensing and communication (ISAC) systems for the first time. Very high frequency bands (e.g., from mm Wave to THz), wider bandwidth, denser deployment, larger antenna arrays, and collaboration between AI and communication nodes/devices, sensing in future communication systems will be an innovative new service and solution, and is expected to evolve together with the communication system as a new function of the communication system.

In an ISAC system, the integration of sensing and communication functions is expected to enhance mutual performance. For example, the communication system may support sensing services. Specifically, it helps to recognize and understand the physical world by utilizing deepened transmitted signals, reflection, and scattering in a manner known as 'network as a sensor'. Conversely, sensing results can be used for access controls such as more precise beamforming, better interference management, faster beam failure recovery, and CSI (Channel State Information) tracking based on overhead reduction. This is known as 'sensing assisted communication'. Also, sensing can be regarded as a 'new channel' connecting the physical world and the digital world. Therefore, the combination of sensing with AI technology in real time will be essential for implementing digital twins.

In general, the levels of mutual utilization between communication and sensing systems may be classified as follows.
(a) 'Co-existence' is a case where sensing and communication operate on physically separate hardware, use the same or different spectrum resources, and do not share any information, treating each other as an interference element.
(b) 'Cooperation' is a case where the two systems are operated on physically separate hardware but information can be shared with each other. For example, sharing prior knowledge of sensing/communication may reduce interference between systems or improve another system depending on the case.
(c) 'Integrated design' is a case where the two systems share information and spectrum resources, use hardware, wireless communication resource management, air interface, signal transmission and processing, and are designed through combined design to operate as a single system. The ISAC of 6G mobile communication focuses on (c) above.

In the integrated design, the development of ISAC technology can be divided into several stages from loosely coupled to fully integrated. At the starting point, the communication and sensing systems can share resources such as spectrum and hardware. Developing efficient scheduling and coordination algorithms to minimize mutual interference between sensing and communication modules is a key research topic. Furthermore, communication and sensing can work cooperatively to improve single system performance. At the advanced stage, by combining technologies such as AI, network cooperation, and multi-node cooperative sensing, the ISAC system can achieve mutual performance improvement, total cost, size, and power consumption reduction benefits.

The capabilities of ISAC include very precise location tracking, imaging (e.g., life science and security applications), simultaneous localization and mapping, pollution or natural disaster monitoring, gesture and activity recognition, fault and material detection, and more, providing new services not limited thereto. These capabilities enable context-aware immersive human-centered communication, industrial automation, connected vehicles and transportation, energy, and medical/electronic health in all forms of business, consumer, and vertical applications of the future.

Communication and sensing services should share available hardware and waveforms and integrate information from various measurement sources in the network deployment area. There are remaining research challenges in areas such as system-level design and evaluation methodology to characterize the fundamental trade-offs between the two functions within the integrated system.

As such, integrated sensing and communication is a technology for combining sensing data collected by various sensors with the communication system. That is, it is a technology for collecting sensing data on the communication system and utilizing it for communication. 3GPP (3rd Generation Partnership Project) is currently developing standards for the combination of sensing and/or communication, which is expected to be used for collecting and processing sensing data in 5G or 6G networks. Integrated sensing and communication (ISAC) is one of the key technologies of 5G or 6G networks and appears to help maximize the potential of 5G networks.

Hereinafter, terms related to integrated sensing and communication (ISAC) will be described based on 3GPP TR 21.905.
- 3GPP sensing data: Data derived from 3GPP wireless signals affected by objects or environments of interest for sensing purposes (e.g., reflection, refraction, diffraction) and selectively processed within the 5G system as data.
- 5G wireless sensing: Using NR wireless signals, it can provide information about characteristics of the environment and/or objects within the environment (e.g., shape, size, direction, speed, location, distance between objects, or relative motion, etc.), and in some cases, uses predefined information available from the LTE core, EPC (Evolved Packet Core), and/or the LTE access network, E-UTRAN (Evolved Universal Terrestrial Radio Access Network).
- Sensing assistance information: Information provided and derived from the 5G system for sensing results. For example, it includes map information, area information, sensing target and associated or nearby UE ID, UE location information, UE speed information, and the like.
- Sensing contextual information: Information that provides the context of the conditions under which sensing results are disclosed to third parties together with the sensing results in the 5G system. For example, it includes map information, area information, capture time, UE location, and ID. This information may need to be combined with data from other sources outside the 5G system.
- Sensing group: A set of sensing transmitters and sensing receivers whose positions are known and whose sensing data can be synchronized.
- Sensing measurement process: A process of collecting sensing data.
- Sensing receiver: An entity that operates to receive sensing signals to be used for sensing services. The sensing receiver may be an NR RAN node or a UE. The sensing receiver may be located at the same entity as the sensing transmitter or at a different entity.
- Sensing result: 3GPP sensing data processed by request of a service consumer.
- Sensing signals: Transmissions over the 3GPP wireless interface that can be used for sensing purposes. Referring to the definition of NR RF signals, in some cases, predefined information available from the EPC and/or E-UTRAN may be used, and this does not affect the EPC and E-UTRAN.
- Sensing transmitter: An entity that operates to transmit sensing signals to be used for sensing services. The sensing transmitter may be an NR RAN node or a UE. The sensing transmitter may be located at the same entity as the sensing receiver or at a different entity.
- Target sensing service area: A Cartesian location area where the impact of a specific sensing service quality (e.g., reflection, refraction, diffraction) on wireless signals should be sensed to derive characteristics of the environment and/or objects within the environment. This includes both indoor and outdoor environments.
- Moving target sensing service area: A case where the target sensing service area moves according to the mobility of the target from the perspective of the sensing transmitter.
- Transparent sensing: Measured data can be distinguished and analyzed in the 5G system, and for example, the data is communicated using an interface defined by the 5G system using standard protocols.

5G wireless sensing is a technique for acquiring information about the characteristics of objects in the environment and/or the environment using radio waves as a tool, and can determine the distance (range), angle, instantaneous velocity, and the like of objects. The 5G wireless sensing service depends on the transmission, reflection, and scattering analysis of wireless sensing signals.

As part of the cellular network, the 5G wireless sensing service is an improved utilization of long-range communication infrastructure in the areas of object detection and tracking, environment monitoring, and human movement monitoring. The wireless sensing service can provide input to various systems such as UAV (Unmanned (or Uncrewed) Aerial Vehicle), smart home, V2X (Vehicle to Everything), factories, and the like. The wireless sensing service may be used in the following use cases.
- Object and intruder detection around critical infrastructure such as smart homes, highways, railways, and factories in predetermined safe areas.
- Tracking of collision avoidance and trajectory of UAVs (Unmanned Aerial Vehicles), vehicles, and AGVs (Automated Guided Vehicles).
- Driving assistance and navigation.
- Public safety search and rescue.
- Rainfall observation and flood prevention.
- Health and sports monitoring.

The use cases primarily focus on 5G wireless sensing, and some use cases also accommodate non-3GPP type sensors (e.g., radar, cameras).

Hereinafter, the embodiments of the present disclosure will be described.

The basic concept of the embodiments of the present disclosure is that a base station requests sensing information from surrounding sensors, and each sensor collects sensing information according to the request and transmits the collected sensing information to the base station. In the first embodiment, the base station directly communicates with the sensors, and in the second embodiment, the base station communicates with the sensors through one 'master sensor (or sensor head)' among a plurality of sensors.

Hereinafter, each embodiment may be separated for convenience of description. Therefore, the technical configurations of the embodiments are not mutually exclusive, and may be implemented together within a scope that does not conflict with each other.

### <First Embodiment>

Hereinafter, the first embodiment will be described.

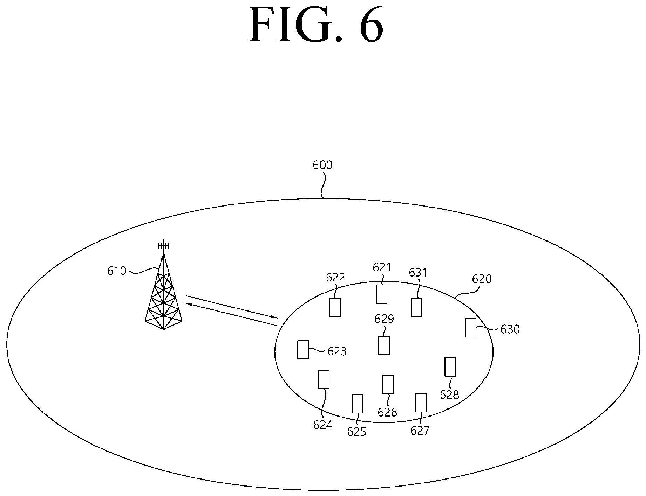

FIG. 6 is a diagram illustrating an example of performing control of sensors according to the first embodiment of the present disclosure.

Referring to FIG. 6, a base station (610) may directly communicate with sensors (621 to 631) located within a cell (600). For reference, reference numeral 620 represents areas where sensors (621 to 631) are conveniently located.

The sensors (621 to 631) may measure various types of data. For example, the sensors (621 to 631) may be a temperature sensor, a pressure sensor, a humidity sensor, a light sensor, a speed sensor, a direction sensor, and a sound pressure sensor for sensing sound. Also, the sensors (621 to 631) may be an accelerometer, a gyroscope, a proximity sensor, a GPS (Global Positioning System) equipped in a mobile terminal or a vehicle. Also, the sensors (621 to 631) may be a carbon dioxide sensor for sensing air quality, a VOC (Volatile Organic Compounds) sensor, a fire detection sensor, or a smoke detection sensor. Also, the sensors may be one of those measuring the state of a wireless channel in a mobile terminal.

The base station (610) directly communicates with each of the sensors (621 to 631) and transmits sensing related information to the sensors (621 to 631). The sensing related information includes sensing configuration information and sensing control information. The sensing configuration information is information for various configurations required for sensing operations of the sensors (621 to 631) and transmission/reception of sensing information. The sensing control information is information about commands or instructions for sensing of the sensors (621 to 631). The detailed content of the sensing configuration information and the sensing control information will be described later.

The sensors (621 to 631) that have received the sensing configuration information and the sensing control information from the base station (610) collect necessary sensing information based on the information, and transmit the collected sensing information to the base station (610).

Hereinafter, the sensing related information will be divided into sensing configuration information and sensing control information for description.

First, regarding the transmission method of the sensing configuration information, the base station (610) transmits sensing configuration information to the sensors (621 to 631). The sensing configuration information may be transmitted, for example, through an RRC (Radio Resource Control) message or system information. The system information may be, for example, an SIB (System Information Block), an MIB (Master Information Block), and the like.

Regarding the specific content of the sensing configuration information, the sensing configuration information may include information on resource allocation for transmission/reception of sensing information, information on the transmission method of sensing information (e.g., duplexing information of FDD (Frequency Division Multiplexing) or TDD (Time Division Multiplexing)), sensing period of the sensing information, initial access (including random access) information for transmission/reception of sensing information, transmission/reception period information of sensing information, retransmission and/or re-transmission information of sensing information, collection method information of sensing information (e.g., periodic, semi-periodic, aperiodic), power control information, sensor network topology information, and the like.

The resource allocation information for transmission/reception of the sensing information may include at least one of frequency resources, time resources, and code resources at which the sensing information is to be transmitted/received. Also, the resource allocation related to the above resource allocation information is related to the sensing period of the sensor for transmission/reception of the sensing information and the transmission/reception period of the sensing information. That is, the resource allocation may be determined based on the period at which the sensor measures the sensing information and transmits it to the base station.

Meanwhile, the sensing period and/or the transmission/reception period of the sensing information may be set based on the QoS (Quality of Service) of the sensing information. That is, the sensing period and the transmission/reception period of the sensing information may be set based on whether the sensing information is information that changes rapidly, or whether the sensing information changes slowly. For example, in the case of sensors within a vehicle, because the vehicle has a fast movement speed, the sensing period and the transmission/reception period of the sensing information of the sensors within the vehicle that sense the surroundings of the vehicle may be set short. In another example, in the case of sensors measuring air pollution, water pollution, or water quality contamination, the sensing period and the transmission/reception period of the sensing information may be set long. In another example, in the case of sensing the state of a wireless channel, the frequency of traffic generated by the corresponding service is considered, and the sensing period and the transmission/reception period of the sensing information may be set short or long accordingly. As such, the sensing period and the transmission/reception period of the sensing information may be set considering the characteristics of each sensing information, traffic characteristics, and QoS.

Regarding the retransmission and/or re-transmission information, the number of repetitions and/or retransmissions of the information may be set based on the importance and/or the required reliability of the sensing information. For example, if the importance and/or the required reliability of the sensing information is high, the sensing information may be set to be retransmitted using repeated transmission and/or HARQ (Hybrid Automatic Repeat Request) or the like. Also, the number of times of the repeated transmission or retransmission may be set based on the importance and/or the required reliability of the sensing information. Conversely, if the importance and/or the required reliability of the sensing information is low, the transmission error may be allowed for the sensing information, and the repeated transmission and/or retransmission may be set not to be performed.

The collection method information of the sensing information may be information indicating whether the sensor is to collect sensing information periodically, aperiodically, or semi-periodically.

The power control information may include initial transmission power information of the sensor, transmission power adjustment information, control information for the sensor to receive data, information related to automatic gain control (AGC), and the like.

The sensor network topology related information may be information related to the topology of the sensors, that is, the deployment of the sensors and the grouping (or clustering) of the sensors.

Hereinafter, the sensing control information will be described.

The base station may transmit sensing control information to the sensors by delivering commands or instructions related to sensing through downlink control information (DCI) or MAC (Medium Access Control) CE (Control Element). DCI may be used for transmission of dynamically changing sensing control information, and MAC CE may be used for transmission of semi-statically changing sensing control information.

To this end, MAC CE parameters for sensing control information may be defined. That is, the base station may instruct or indicate commands related to sensing to the sensors through the parameters of the MAC CE, or may change sensing configuration information configured for the sensors through RRC messages.

Also, in the first embodiment of the present disclosure, a DCI format for sensing control information may be defined. The DCI format for sensing control information may be configured to allow the sensors to easily decode DCI information considering the functions and/or capabilities of the sensors. For example, the DCI format for sensing control information may be a reduced form with fewer information bits than a general DCI format. Also, for transmission of the DCI for sensing control information, a channel coding method and/or a modulation method with lower complexity than those used for current DCI transmission may be applied.

Also, a new form of control information different from the existing DCI, for example, DSCI (Downlink Sensing Control Information), may be newly defined to control the sensors. In this case, a separate control channel, PDSCCH (Physical Downlink Sensing Control CHannel), for transmitting the DSCI to the sensors may be defined.

Meanwhile, MAC CE or DCI is associated with values set in higher layer messages, i.e., RRC messages. Specifically, the MAC CE may be used to change settings configured through RRC messages related to sensing. For example, when the collection method of sensing information is set to 'periodic' via an RRC message, it may be changed to 'aperiodic' or 'semi-periodic' through the MAC CE.

In the first embodiment of the present disclosure, sensing control information transmitted through the MAC CE or DCI is defined. The sensing control information may include control information about the sensing method of the sensors, information about the processing of sensing information, control information about the transmission/reception of sensing information, and the like.

Meanwhile, the sensor may directly transmit the sensing information it has collected to the base station, or may perform separate processing on the sensing information and then transmit the processed sensing information to the base station. The separate processing may be, for example, machine learning-based processing.

Specific examples of the sensing control information included in the MAC CE or DCI are as follows.
- Sensing time and period information: Information that may indicate performing sensing periodically, aperiodically, or semi-periodically.
- Sensor activation/deactivation information: Information that indicates activation of necessary sensors among the sensors and deactivation of unnecessary sensors. Activation/deactivation of sensors may be performed on a subset or cluster basis.
- Sensor topology information: Information that may be the topology and/or subset of the sensors. The sensor subsets may be set considering, for example, the location, function, capability, or operating time, and the like of the sensors based on various criteria.
- Processing-related information of sensing information: Information that may include the transmission time and period information of the sensing information or the processed sensing information.

Among the sensing control information above, the activation/deactivation information of the sensors and the sensor topology information may be used to control the sensors on a subset basis. That is, the base station may set sensor subsets for sensors within its coverage based on certain criteria, and may provide sensor topology information to the sensors based on the set sensor subsets. Also, the base station may use the activation/deactivation information of the sensors to indicate activation of a required sensor subset or indicate deactivation of an unnecessary sensor subset.

For example, when a total of 100 sensors are set into subset A (30 sensors), subset B (40 sensors), and subset C (30 sensors) based on the area where the sensors are located, and all sensors are currently in a deactivation state, the base station may use the activation/deactivation information of the sensors and the sensor topology information to indicate activation of only subset A. In another example, when all sensors are currently in an activation state, the base station may use the activation/deactivation information and the sensor topology information to indicate deactivation of subsets B and C.

By performing control of sensors on a subset basis using sensor control information such as activation/deactivation information and sensor topology information, the number of sensors required for sensing information collection may be adjusted according to the characteristics of the sensing information. For example, if the required level of accuracy of the sensing information is rough, the base station may control the sensors to receive sensing information from some of all sensors. On the other hand, if the required level of accuracy of the sensing information is precise, the base station may control the sensors to receive sensing information from a larger number of sensors. As such, when the base station does not need to receive sensing information from all sensors, it can receive sensing information from only some of the sensors, thereby saving the collection and processing time of sensing information and the transmission/reception resources of sensing information.

### <Second Embodiment>

The above-described first embodiment assumed that the base station and the sensors may perform direct communication. In general, since the sensors perform simple sensing functions, the sensors tend to have low hardware specifications and may not have good performance. Therefore, in the case of low-specification sensors, direct communication with the base station is often difficult due to transmission power and reception signal decoding performance, and the like.

In consideration of this point, the second embodiment of the present disclosure proposes a method in which the base station performs direct communication with a master sensor (or sensor head), and the master sensor communicates with adjacent sensors in a linked manner. The adjacent sensors correspond to the concept of 'slave sensors' relative to the 'master sensor'.

Any of the sensors may be the master sensor, and sensors that receive sensing-related control commands (information) from the master sensor become 'slave sensors'. Also, a specific sensor is not fixed as a master sensor, and one sensor may become a master sensor or a slave sensor.

However, since the master sensor must perform direct communication with the base station, the transmission power and decoding performance must be at least above a certain standard. To this end, the base station may obtain sensor information including the performance of the sensors and determine the master sensor based on the obtained sensor information. Examples of how the base station acquires information about the sensors to determine the master sensor are as follows.

For example, the base station may determine the master sensor based on signal strength of the random access preamble of a random access procedure or channel state information of the sensors that have accessed among all sensors. In another example, the base station may request sensor information from the sensors that have accessed the base station and may receive performance information of the sensors from the sensors. In another example, the base station may acquire information of all sensors in advance from an entity managing the sensors in the core network. Meanwhile, when the base station has determined the master sensor, the base station may inform the sensors within the cell of which sensor is the master sensor through system information, and the like.

Meanwhile, direct communication may also be performed between the slave sensors. Therefore, sequential multi-hop communication between the master sensor and a plurality of slave sensors may also be performed.

Various communication methods may be used for direct communication between sensors (i.e., between master sensor and slave sensor, or between slave sensors). For example, the sensors may be connected through a sidelink. In another example, the sensors may directly communicate through a wireless sensor network (WSN), ad-hoc network, or mesh network. In another example, when the distance between sensors is close, the sensors may directly communicate using a short-range communication method such as Bluetooth or ZigBee. In another example, the sensors may directly communicate using a technology such as LoRaWAN (Long Range Wide Area Network) or LPWA (Low Power Wide Area). For reference, LoRaWAN is a communication protocol that can cover a wide range with low power.

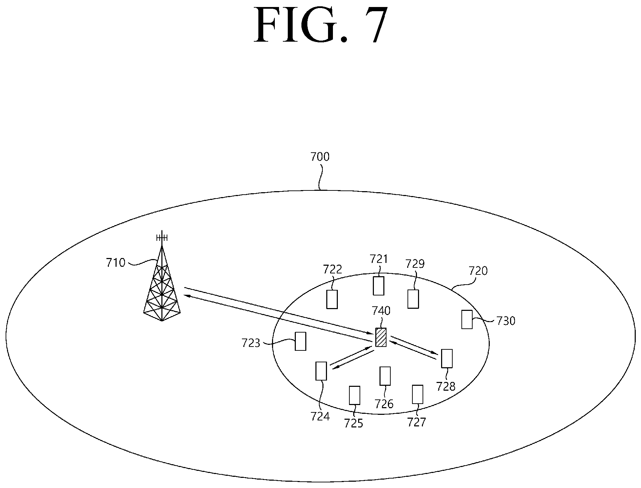

In FIG. 7 below, the sensors are assumed to perform direct communication between sensors through a sidelink. Accordingly, the sensor network described in FIG. 7 will be referred to as a 'sidelink-based sensor network'.

FIG. 7 is a diagram illustrating an example of performing control of sensors in a sidelink-based sensor network according to the second embodiment of the present disclosure.

In FIG. 7, the sensors located in the sensor area (720) are shown with one master sensor (740) being set and the remaining sensors (721 to 730) being set as slave sensors. For convenience of description, only one master sensor (740) is shown, but a plurality of master sensors may be set for controlling sensors distributed within the cell (700).

The master sensor (740) and slave sensors (721 to 730) may measure various types of data. For example, the sensors (721 to 731, 740) may be a temperature sensor, a pressure sensor, a humidity sensor, a light sensor, a speed sensor, a direction sensor, a motion sensor, and a sound pressure sensor for sensing sound. Also, the sensors (721 to 731, 740) may be an accelerometer, a gyroscope, a proximity sensor, a GPS (Global Positioning System) equipped in a mobile terminal or a vehicle. Also, the sensors (721 to 731, 740) may be a carbon dioxide sensor for sensing air quality, a VOC (Volatile Organic Compounds) sensor, a fire detection sensor, or a smoke detection sensor. Also, the sensors may be one of those measuring the state of a wireless channel in a mobile terminal.

Referring to FIG. 7, the base station (710) may directly communicate with the master sensor (740) located within the cell (700). That is, the base station (710) may transmit sensing related information to the master sensor (740).

The sensing related information includes sensing configuration information and sensing control information. The sensing configuration information is information for various configurations required for sensing operations of the sensors and transmission/reception of sensing information. The sensing control information may include control information about the sensing method of the sensors, control information about the processing of sensing information, or control information about the transmission/reception of sensing information. The detailed content of the sensing configuration information and the sensing control information will be described later. In order to distinguish the sensing related information of the second embodiment from the sensing configuration information of the first embodiment, hereinafter, the sensing configuration information of the second embodiment will be referred to as 'sidelink sensing configuration information', and the sensing control information of the second embodiment will be referred to as 'sidelink sensing control information'. The specific content of the sidelink sensing configuration information and the sidelink sensing control information will be described later.

As described above, in the second embodiment, the base station (710) may transmit sidelink sensing related information to the master sensor (740), but may also directly transmit the sidelink sensing configuration information to the slave sensors (721 to 730). That is, the base station (710) may directly transmit the sidelink sensing configuration information as system information through broadcast to the slave sensors (721 to 730). For example, the base station (710) may determine the master sensor from among the sensors and broadcast identification information of the determined master sensor (740) as system information. However, in this case, the base station (710) also transmits the sidelink sensing control information to the master sensor (740).

The master sensor (740) may directly communicate with the slave sensors (721 to 730) through a sidelink. Also, the master sensor (740) may perform control over the slave sensors (721 to 730) based on the sidelink sensing related information received from the base station (710). This may be compared to the first embodiment in which the base station (610) directly communicates with the sensors (621 to 631) and controls the sensors (621 to 631).

Specifically, the master sensor (740) may deliver the sidelink sensing related information received from the base station (710) to the slave sensors (721 to 730), thereby controlling the slave sensors (721 to 730).

Alternatively, the master sensor (740) may generate sidelink sensing related information through its own processing to deliver to the slave sensors (721 to 730), thereby controlling the slave sensors (721 to 730). For example, the master sensor (740) may generate sensing configuration for the slave sensors (721 to 730) based on its own information about the capabilities or performance of the slave sensors (721 to 730) and the sidelink sensing related information received from the base station (710). In this case, the master sensor (740) generates its own sidelink sensing related information and transmits the generated sidelink sensing related information to the base station (710) so that the base station (710) can know the sidelink sensing related information generated by the master sensor (740). The master sensor (740) may perform separate processing such as artificial intelligence/machine learning (AI/ML) to generate the sidelink sensing related information.

Hereinafter, the sidelink sensing related information will be divided into sidelink sensing configuration information and sidelink sensing control information for description. First, the sidelink sensing configuration information will be described.

Regarding the transmission method of the sidelink sensing configuration information, the base station (710) may broadcast the sidelink sensing configuration information as system information directly to the slave sensors (721 to 730). The system information may be, for example, an SIB (System Information Block), an MIB (Master Information Block), and the like.

Alternatively, the base station (710) may transmit the sidelink sensing configuration information to the master sensor (740) through an RRC message or system information, and the master sensor (740) may deliver the received sidelink sensing configuration information to the slave sensors (721 to 730). The system information may be, for example, an SIB and MIB, and the like.

Alternatively, the master sensor (740) may generate new sidelink sensing configuration information based on information of the sidelink sensing configuration information and the slave sensors (721 to 730) received from the base station (710), and may transmit the generated information to the slave sensors (721 to 730). In this case, the master sensor (740) may also transmit the newly generated sidelink sensing configuration information to the base station (710).

Regarding the specific content of the sidelink sensing configuration information, the sidelink sensing configuration information may include sidelink resource allocation information for transmission/reception of sensing information using a sidelink, transmission method information of sensing information (e.g., duplexing information of FDD or TDD), sensing period of the sensing information, initial access (including random access) information for transmission/reception of sensing information, transmission/reception period information of sensing information, retransmission and/or re-transmission information of sensing information, collection method information of sensing information (e.g., periodic, aperiodic, semi-periodic), power control information, sensor network topology information, and the like.

Meanwhile, the sidelink sensing configuration information may further include master sensor related information. In the second embodiment, the sidelink-based sensor network is composed of a master sensor (740) and slave sensors (721 to 730). The slave sensors (721 to 730) receive sensing related control information from the master sensor (740), and transmit collected sensing information to the master sensor (740). Therefore, information about the master sensor (740) needs to be delivered to the slave sensors (721 to 730). Accordingly, the sidelink sensing configuration information in the second embodiment may additionally include master sensor related information. The master sensor related information may include an identifier of the master sensor.

The sidelink resource allocation information above may include at least one of frequency resources, time resources, and code resources at which the sensing information is to be transmitted/received. Also, the sidelink resource allocation information and the resource allocation for transmission/reception of the sensing information are related to the sensing period of the sensor and the transmission/reception period of the sensing information. That is, the resource allocation may be related to the period at which the slave sensor measures the sensing information and transmits it to the master sensor.

Such a sensing period and/or the transmission/reception period of the sensing information may be set based on the QoS (Quality of Service) of the sensing information. That is, the sensing period and the transmission/reception period of the sensing information may be set based on whether the sensing information is information that changes rapidly or changes slowly.

For example, in the case of sensors within a vehicle, because the vehicle has a fast movement speed, the sensing period and the transmission period of the sensing information of the sensors within the vehicle that sense the surroundings of the vehicle may be set short. In another example, in the case of sensors measuring air pollution, water pollution, or water quality contamination, the sensing period and the transmission period of the sensing information may be set long. In another example, in the case of sensing the state of a wireless channel, the frequency of traffic generated by the corresponding service is considered, and the sensing period and the transmission period of the sensing information may be set short or long accordingly. As such, the sensing period and the transmission period of the sensing information may be set considering the characteristics of each sensing information, traffic characteristics, and QoS.

Regarding the retransmission and/or re-transmission information, the number of repetitions and/or retransmissions of the information may be set based on the importance and/or the required reliability of the sensing information. For example, if the importance and/or the required reliability of the sensing information is high, the sensing information may be set to be retransmitted using repeated transmission and/or HARQ (Hybrid Automatic Repeat Request) or the like. Also, the number of times of the repeated transmission or retransmission may be set based on the importance and/or the required reliability of the sensing information. Conversely, if the importance and/or the required reliability of the sensing information is low, the transmission error may be allowed for the sensing information, and the repeated transmission and/or retransmission may be set not to be performed.

The collection method information of the sensing information may be information indicating whether the sensor is to collect sensing information periodically, aperiodically, or semi-periodically.

The power control information may include initial transmission power information of the sensor, transmission power adjustment information, control information for the sensor to receive data, information related to automatic gain control (AGC), and the like.

The sensor network topology related information may be information related to the topology of the sensors, that is, the deployment of the sensors and the grouping (or clustering) of the sensors.

Hereinafter, the sidelink sensing control information will be described.

The base station or the master sensor may transmit sidelink sensing control information by delivering commands or instructions related to sensing of the slave sensors through downlink control information (DCI) or MAC (Medium Access Control) CE (Control Element) or SCI (Sidelink Control Information) to the slave sensors. That is, the base station may transmit sidelink sensing control information to the master sensor through DCI or MAC CE, and the master sensor may transmit sidelink sensing control information to the slave sensors through SCI or MAC CE. DCI and SCI may be used for transmission of dynamically changing sensing control information, and MAC CE may be used for transmission of semi-statically changing sensing control information.

To this end, a DCI format or SCI format for sidelink sensing control information may be defined. The DCI format or SCI format for sidelink sensing information may be configured to allow the sensors to easily decode DCI or SCI information considering the functions and/or capabilities of the sensors. For example, the DCI format or SCI format for sidelink sensing information may be a reduced form with fewer information bits than a general DCI format or SCI format. Also, for transmission of the DCI or SCI for sidelink sensing information, the channel bandwidth, i.e., CBW (Channel BandWidth) or BWP (BandWidth Part), of the channel through which the DCI or SCI is transmitted may be designed to be smaller than the bandwidth for transmission of other control information. Also, for sidelink sensing information, a channel coding method and/or a modulation method with lower complexity than those used for general DCI or SCI transmission may be applied.

Also, MAC CE parameters for sidelink sensing control information may be defined. That is, the base station or the master sensor may instruct or indicate commands related to sensing to the sensors through the parameters of the MAC CE, or may change sidelink sensing configuration information configured for the sensors through RRC messages.

Meanwhile, a new form of control information different from the existing DCI or SCI, for example, DSCI (Downlink Sensing Control Information) or SSCI (Sidelink Sensing Control Information), may be newly defined to control the sensors. In this case, a separate control channel, PDSCCH (Physical Downlink Sensing Control CHannel), for transmitting the DSCI to the sensors, and a separate control channel, PSSCCH (Physical Sidelink Sensing Control CHannel), for transmitting the SSCI to the sensors may be defined.

The MAC CE, DCI, DSCI, SCI, or SSCI may be associated with values set in higher layer messages, i.e., RRC messages. For example, the MAC CE may be used to change settings configured through RRC messages related to sensing. For example, when the collection method of sensing information is set to 'periodic' via an RRC message, it may be changed to 'aperiodic' or 'semi-periodic' through the MAC CE.

In the second embodiment of the present disclosure, sidelink sensing control information transmitted through the MAC CE, DCI, DSCI, SCI, or SSCI is defined. The sidelink sensing control information may include control information about the sensing method of the slave sensors, control information about the processing of sensing information, and control information about the transmission/reception of sensing information.

Meanwhile, the slave sensor may directly transmit the sensing information it has collected to the master sensor, or may perform separate processing on the collected sensing information and then transmit the processed sensing information to the master sensor. The master sensor may also directly deliver the sensing information received from the slave sensors to the base station, or may perform separate processing and transmit the result to the base station. The separate processing performed by the slave sensor or the master sensor may be, for example, machine learning-based processing.

Specific examples of the sidelink sensing control information included in the MAC CE, DCI, DSCI, SCI, or SSCI are as follows.
- Sensing time and period information: Information that may indicate performing sensing periodically, aperiodically, or semi-periodically.
- Sensor activation/deactivation information: Information that indicates activation of necessary sensors among the sensors and deactivation of unnecessary sensors. Activation/deactivation of sensors may be performed on a subset or cluster basis.
- Sensor topology information: Information that may be the topology and/or sensor subset of the master sensor and the slave sensors. The sensor subsets may be set considering, for example, the location, function, capability, or operating time, and the like of the sensors based on various criteria.
- Processing-related information of sensing information: Information that may include the transmission time and period information of the sensing information or the processed sensing information.

Among the sidelink sensing control information above, the activation/deactivation information of the sensors and the sensor topology information may be used to control the sensors on a subset basis. That is, the base station or the master sensor may set sensor subsets for the slave sensors within the coverage of the master sensor based on certain criteria, configure sensor topology information based on the set sensor subsets, and provide the sensor topology information to the master sensor and/or the slave sensors. Also, the base station or the master sensor may use the activation/deactivation information of the sensors to indicate activation of a required sensor subset or indicate deactivation of an unnecessary sensor subset.

For example, when a total of 100 slave sensors are set into subset A (30 sensors), subset B (40 sensors), and subset C (30 sensors) based on the area where the slave sensors are located, and all slave sensors are currently in a deactivation state, the base station may use the activation/deactivation information of the sensors and the sensor topology information to indicate activation of only subset A. In another example, when all slave sensors are currently in an activation state, the base station may use the activation/deactivation information and the sensor topology information to indicate deactivation of subsets B and C.

By performing control of sensors on a subset basis using sensor control information such as activation/deactivation information and sensor topology information, the number of sensors required for sensing information collection may be adjusted according to the characteristics of the sensing information. For example, if the required level of accuracy of the sensing information is rough, the base station or the master sensor may control the sensors to receive sensing information from some of all slave sensors. On the other hand, if the required level of accuracy of the sensing information is precise, the base station or the master sensor may control the sensors to receive sensing information from a larger number of slave sensors. As such, when the base station or the master sensor does not need to receive sensing information from all slave sensors, it can receive sensing information from only some of the slave sensors, thereby saving the collection and processing time of sensing information and the transmission/reception resources of sensing information.

### <Third Embodiment>

Hereinafter, the third embodiment of the present disclosure will be described. The third embodiment considers the characteristics of ISAC to define sensing information quality of service (QoS), control information and control commands related to the operating state of sensors, and channels for transmitting/receiving sensing information or control information.

Hereinafter, the QoS for the sensing information will be described.

In the third embodiment, based on the characteristics of the sensing information, packet error parameters (e.g., Packet Loss Rate) or packet delay parameters (e.g., Packet Delay Budget) are used to set QoS for each type of sensing information, and QoS flows for achieving the set QoS are configured.

For example, sensing information A is real-time sensing information such as heartbeat information or vehicle driving information that changes rapidly, and sensing information B is sensing information that does not change rapidly, such as weather information or humidity information. In this case, the delay time and packet loss rate of sensing information A may be important. Therefore, a QoS and QoS flow having a high priority and a low delay time may be set for sensing information A. On the other hand, sensing information B may require accuracy of the sensing information rather than real-time performance. Therefore, a QoS and QoS flow having a low priority and high accuracy may be set for sensing information B. For reference, in order to ensure the accuracy of sensing information B, a packet loss recovery function may be set for the QoS flow of sensing information B.

Hereinafter, control commands related to the operating state of the sensor will be described.

The operating state of the sensor may be classified into an active state, an idle state, and an inactive state. In some cases, it may also be classified into an active state and an inactive state. The active state is a state in which the sensor may perform both communication operations and sensing operations. The idle state is a state in which the sensor does not perform communication operations and sensing operations, but may immediately perform communication and sensing upon occurrence of an event, instruction, or the like. The inactive state is a state in which the sensor stops communication operations and sensing operations and minimizes power consumption. Compared to the idle state, the inactive state may require instruction or an event to occur and time may be required to perform communication and sensing operations. The present disclosure defines the following control information related to the operating state of the sensor.
- Sensor operating state information: Information indicating the operating state of the sensor. The operating state configuration may indicate one of the active state/idle state/inactive state, or indicate one of the active state/inactive state. This control information may be used to instruct some of all sensors to operate in the active state. It may primarily be used when setting the initial state of the sensors, but is not limited thereto.
- Sensor wake-up signal: A control command that may be used to wake up a sensor in the inactive state. The wake-up signal may be used after the initial state of the sensor is set, but is not limited thereto. A sensor that has received the wake-up signal may check a paging message for communication operations. The setting may also instruct the sensor to wake up from the idle or inactive state and immediately transition to the idle state and perform sensing operations.

Hereinafter, channels for transmitting/receiving the control information above will be described.

The control information related to the operating state above is composed of a small number of information bits (e.g., 1 bit). Also, this control information may be delivered to the sensors using a sensing control channel defined in the present disclosure. The sensing control channel may be a downlink channel from the base station in the direction of the sensor, or may be a sidelink channel for transfer of control information between sensors. The downlink channel from the base station in the direction of the sensor may be defined as, for example, a PDSCCH (Physical Downlink Sensing Control CHannel), and the sidelink channel between sensors may be defined as, for example, a PSSCCH (Physical Sidelink Sensing Control CHannel).

Meanwhile, the sensor may report sensing information or control information to the base station or the master sensor as required by the base station or the master sensor for control of the sensor.

The sensor may use existing 3GPP-defined uplink channels to transmit sensing information or control information to the base station. For example, the sensor may transmit sensing information to the base station through a PUSCH (Physical Uplink Shared CHannel), and may transmit control information to the base station through a PUCCH (Physical Uplink Control CHannel). Alternatively, the sensor may transmit sensing information and/or control information to the base station through a PUSCH or PUCCH.

Meanwhile, the sensor may transmit sensing information and/or control information through a separate uplink physical channel defined in the present disclosure, for example, a PUSSCH (Physical Uplink Sensing Shared CHannel) or a PUSCCH (Physical Uplink Sensing Control CHannel), to the base station. For example, the sensor may transmit sensing information through the PUSSCH to the base station, and may transmit control information through the PUSCCH to the base station. Alternatively, the sensor may transmit sensing information and/or control information through the PUSSCH and/or PUSCCH to the base station.

Also, the sensor (e.g., slave sensor) may transmit sensing information or control information to another sensor (e.g., master sensor). Specifically, the sensor may transmit sensing information and/or control information through a separate sidelink physical channel defined in the present disclosure, for example, a PSSSCH (Physical Sidelink Sensing Shared CHannel) or a PSSCCH (Physical Sidelink Sensing Control CHannel), to another sensor. For example, the sensor may transmit sensing information through the PSSSCH to another sensor, and may transmit control information through the PSSCCH to another sensor. Alternatively, the sensor may transmit sensing information and/or control information through the PSSSCH and/or PSSCCH to another sensor.

Meanwhile, considering the power consumption required for processes such as decoding when the sensor receives control information, in the present disclosure, the DCI or SCI for control information may be designed to be more easily decoded than a general DCI or SCI. For example, the DCI or SCI format for control information may be a reduced form with fewer information bits than a general DCI format or SCI format. Also, the channel bandwidth for the DCI or SCI for control information, i.e., CBW (Channel BandWidth) or BWP (BandWidth Part), may be designed to be smaller than the bandwidth for transmission of other control information. Also, for the control information, a channel coding method and/or a modulation method with lower complexity than those used for general DCI or SCI transmission may be applied.

Also, a new form of control information different from the existing DCI or SCI, for example, DSCI (Downlink Sensing Control Information) or SSCI (Sidelink Sensing Control Information), may be newly defined to control the sensors. In this case, a separate control channel, PDSCCH (Physical Downlink Sensing Control CHannel), for transmitting the DSCI to the sensors, and a separate control channel, PSSCCH (Physical Sidelink Sensing Control CHannel), for transmitting the SSCI to the sensors may be defined.

### <Fourth Embodiment>

Hereinafter, the fourth embodiment of the present disclosure will be described. The fourth embodiment is a method in which sensors perform multi-hop relay functions in an ISAC sensor network.

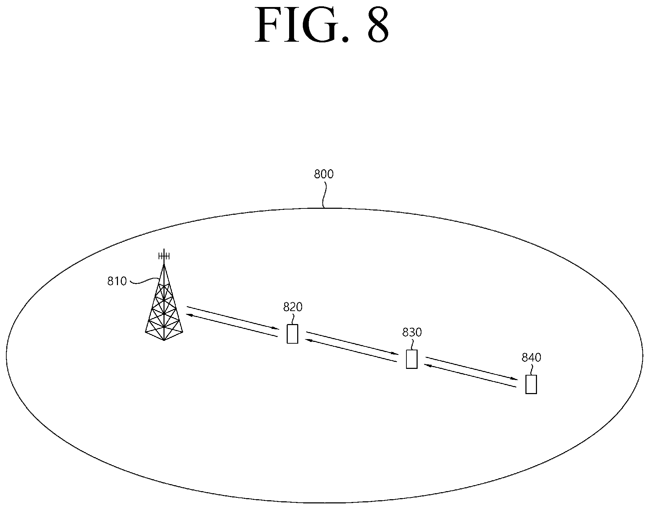

FIG. 8 is a diagram illustrating a sensor network having a multi-hop relay function according to the fourth embodiment of the present disclosure.

Referring to FIG. 8, among sensors within a cell (800), sensors A (820), B (830), and C (840) may all have a relay function. Sensor D (850) outside the cell (800) may or may not have a relay function. Since the base station (810) has transmission power limitations within the cell coverage, the base station (810) may directly transmit information to sensors (820, 830, 840) on the downlink. However, in some cases, for example, when there is a need to transmit information to sensor D (850) outside the cell, the sensors (820, 830, 840) may transmit information using multi-hop relay. Accordingly, sensor A (820), which has a relay function and has received information from the base station (810), may deliver the information to sensor B (830), and sensor B (830) may deliver the information to sensor C (840). Sensor C (840) may deliver the information to sensor D (850) outside the cell. However, the multi-hop relay function is used not only for delivering information to sensors outside the cell, but may also be used for delivering information to sensors within the cell.

Sensors with low hardware specifications typically have limited transmission power, and since many sensors operate on batteries, reducing power consumption of the sensors is important. Considering this, multi-hop relay among sensors, especially uplink, may be important. Sensor D (850) may transmit the sensing information it collected to sensors C (840), B (830), and then to the base station (810) through sensor A (820). At this time, sensors C (840), B (830), and A (820) may deliver not only the sensing information of sensor D (850), but also their own sensing information.

Meanwhile, each sensor may deliver the received information as is, or may perform separate processing and then deliver it. Also, 'sensing relay related information' necessary for performing the multi-hop relay function may be delivered to the sensors. The sensing relay related information includes sensing relay configuration information and sensing relay control information.

The sensing relay configuration information and the sensing relay control information are similar to the sensing configuration information and the sensing control information of the first embodiment, or the sidelink sensing configuration information and the sidelink sensing control information described in the second embodiment. That is, the sensing relay configuration information is information for various configurations required for sensing operations and transmission/reception of sensing information of the sensors. The sensing relay control information is information about commands or instructions for sensing of the sensors, control information, and information about multi-hop relay of sensing information.

The sensing relay configuration information includes configuration information necessary for sensing of the sensors, and may be delivered to the sensors through RRC messages or system information. The system information may be, for example, an SIB, an MIB, and the like. Alternatively, the sensing relay configuration information may be delivered between sensors through connection between sensors (e.g., sidelink, etc.). The latter may be particularly useful when the sensor is outside the cell.

The sensing relay configuration information may include resource allocation information (= scheduling information) for transmission/reception of sensing information, transmission method information of sensing information (e.g., duplexing information of FDD or TDD), sensing period of the sensing information, transmission/reception period of sensing information, retransmission and/or re-transmission information of sensing information, collection method information of sensing information (e.g., periodic, aperiodic, semi-periodic), power control information, sensor network topology information, and the like. The descriptions of these information elements are the same as those described in the first embodiment or the second embodiment above.

The sensing relay control information may be applied within a range that does not conflict with the descriptions of the sensing control information of the first embodiment or the sidelink sensing control information of the second embodiment to multi-hop relay. Accordingly, the base station may transmit the sensing relay control information to DCI, MAC CE, or SCI through at least one sensor and then to a terminal sensor. At this time, relay between sensors may be performed by direct communication through a sidelink. However, the sensing relay control information may additionally include information for relay of the control information or sensing information. For example, since the control information or sensing information is relayed through multi-hop, the sensing relay control information may include routing information for multi-hop. Also, since information is transmitted through a plurality of sensors, information on timing (e.g., timing advance) and time and frequency synchronization for each sensor to transmit information may be included.

### <Fifth Embodiment>

Hereinafter, the fifth embodiment of the present disclosure will be described. The fifth embodiment relates to a sensor network topology for ISAC.

The sensor network topology proposed in the fifth embodiment may be composed of at least one sensor subset, or cluster, among all sensors such that partial operation of some of the sensors is possible. That is, considering that not all sensors need to be activated depending on the purpose of using the sensor network, sensor subsets are configured, and sensors included in a specific subset may be activated as necessary.

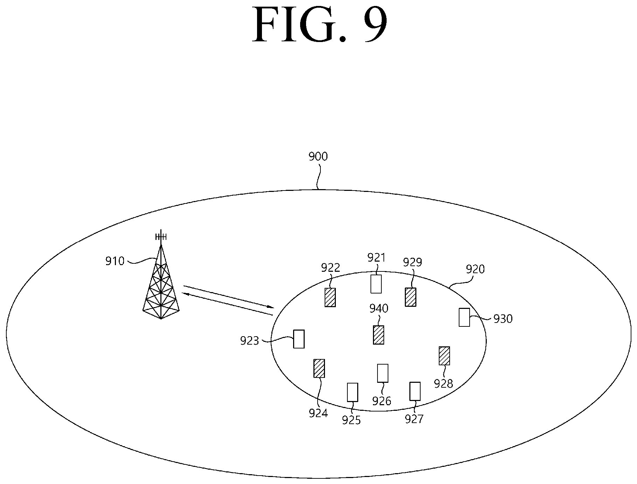

FIG. 9 is a diagram illustrating an example of a topology of a sensor network for ISAC according to the fifth embodiment of the present disclosure.

Referring to FIG. 9, sensors within a cell (900) are grouped (= clustered) into two groups. That is, sensors 921, 923, 925, 926, and 927 are sensors included in group 1, and sensors 922, 924, 928, 929, and 940 are sensors included in group 2.

When the base station (910) performs direct communication with the sensors as described in the first embodiment, for example, the base station (910) may indicate activation of sensors in group 1 or indicate activation of sensors in group 2.

By activating only some of all sensors in this way, the initial setup time of the sensor network may be reduced. Also, when some sensors cannot operate due to abnormal conditions or the like, the base station (910) may control other sensors to operate normally. Also, the base station (910) may optimally set the grouping of the sensors and select the sensor groups required based on the importance of the sensing information or the QoS required of the sensing information. In this way, the base station may activate only the necessary sensors among all sensors on a group basis, thereby achieving an energy-saving effect.

The base station (910) may group the sensors considering various criteria such as the location of the sensors, function, capability, or operating time of the sensors, and the importance of the sensing information and the required QoS.

Meanwhile, the base station (910) may configure group sensing related information for sensing and control of the grouped sensors. The group sensing related information includes group sensing configuration information and group sensing control information. The contents of the group sensing configuration information and the group sensing control information are the same as those of the sensing configuration information and the sensing control information described in the first embodiment, or the sidelink sensing configuration information and the sidelink sensing control information described in the second embodiment. That is, the descriptions of the first embodiment or the second embodiment may be applied within a range that does not conflict with the fifth embodiment.

However, since sensor groups are set in the fifth embodiment, the base station may assign group IDs to the sensor groups. Accordingly, the base station may include sensor group ID information in the group sensing configuration information and provide it to the sensors through system information or RRC messages.

Also, the base station may include control information about the sensor groups in the group sensing control information, and may deliver the information to sensors within the sensor groups through MAC CE or DCI. Between sensors, the group sensing control information may be delivered through MAC CE or SCI. For example, the group sensing control information may include information indicating activation or deactivation of the sensor group. When the information indicating activation or deactivation of the sensor group is delivered to the sensors having the group ID, the sensors having the group ID may be activated or deactivated.

Meanwhile, as described in the second embodiment, a master sensor (or sensor head) may be set within each group, and the master sensor may perform communication with an external base station or master sensors of other groups.

Also, even after the sensor network topology is configured, the topology may be dynamically changed. For example, when a sensor network is configured using sensors within a moving vehicle, the positions of the sensors change rapidly as the vehicle moves. As the positions of the sensors change dynamically, the base station or the master sensor may acquire real-time location information of the sensors and may configure an optimal sensor network topology for acquiring the necessary sensing information based on the real-time location information. For example, the base station or the master sensor may use artificial intelligence/machine learning (AI/ML) based on information such as the location, function, and capability of the sensors to reconfigure the network topology in real time.

Meanwhile, sensor groups (= clusters) configured from RIS (Reconfigurable Intelligent Surface) may be used for performance improvement. For reference, RIS is one of the important technologies expected to be used in 6G communications, and can process received radio waves to improve wireless communication performance. RIS generally consists of a large number of small reflective panels or switches, and these panels or switches can process received radio waves according to the surrounding environment to electrically change the state. Through this state change, RIS can reflect or refract radio waves in a desired direction to form signals. Through this, RIS can provide benefits such as bandwidth expansion, capacity increase, energy efficiency improvement, and the like.

To utilize RIS, it is necessary for the RIS to continuously check the processed radio waves, or beams, and accordingly, the sensors may sense the signal state by beams processed by the RIS. When checked per sensor group (= cluster), the information of beams processed by the RIS in the cluster may be acquired, and the sensor groups may be used for improving the performance of the RIS. To this end, in the present disclosure, when configuring the sensor network topology or sensor groups, the placement of the RIS may be considered. That is, within the entire cell area, the sensors may be grouped considering the placement of the RISs, and the accuracy of performance information acquired from the sensor groups configured in this way and utilizing the RIS may be improved.

### <Sixth Embodiment>

The sixth embodiment is a method in which some sensors among all sensors perform sensing operations even when sensor groups are not configured.

The fifth embodiment assumed a case where sensor groups are pre-configured. On the other hand, in the sixth embodiment, even when sensor groups are not pre-configured, a certain proportion or more of all sensors are activated, and those sensors may be controlled to perform sensing.

In the sixth embodiment, when a certain proportion of all sensors are activated and only the activated sensors are to perform sensing operations, this is to prevent a time delay that may occur when all sensors are activated. Since sensors have low hardware performance, the activation of the sensors and random access to the base station may require a lot of time. Therefore, the activation of some low-specification sensors and the time delay caused by random access may delay the entire sensor system operation together. From this perspective, in the sixth embodiment, when a certain proportion of all sensors are activated and connected to the base station, sensing operations may be performed with only the activated proportion of sensors even if the remaining sensors are not activated.

An example of a case where there are 100 sensors in a cell of the base station and it is determined that it is sufficient if 40 of those sensors collect sensing information is as follows. The base station may instruct all 100 sensors to activate the sensors. Sensors that have completed activation may perform random access to the base station and connect to the base station and notify that sensing preparation is complete. At this time, the base station should control the access of the sensors on a first-come, first-served basis. That is, the base station may allow random access for the first 40 sensors on a first-come, first-served basis, and may not allow random access for sensors after the 40th sensor. In this way, the base station may allow random access for a pre-determined proportion of sensors, and instruct the 40 terminals connected to the base station through the random access to perform sensing. Thereafter, the sensors may collect sensing information and transmit it to the base station. As such, the base station may instruct sensing for sensors connected to the base station on a first-come, first-served basis among all sensors up to a certain proportion, thereby quickly collecting sensing information.

So far, the embodiments in which ISAC is applied to 3GPP-based mobile communication systems have been described. The above-described embodiments can be applied not only to 3GPP-based mobile communication systems but also to IEEE (Institute of Electrical and Electronics Engineers) 802.11-based wireless LAN, i.e., Wi-Fi systems.

That is, in a Wi-Fi system, assuming a system in which an access point (AP) or a wireless router is connected to a plurality of sensors, in the above-described embodiments of the present disclosure, the base station may correspond to the AP or the wireless router of the Wi-Fi system. Also, the sensing configuration information and sensing control information described in the above embodiments may correspond to Wi-Fi network configuration and management information. With such correspondence, the descriptions of the above embodiments of the present disclosure may be applied to the Wi-Fi system as they are.

Hereinafter, the configurations of the sensor device and the base station device applicable to the embodiments of the present disclosure will be described.

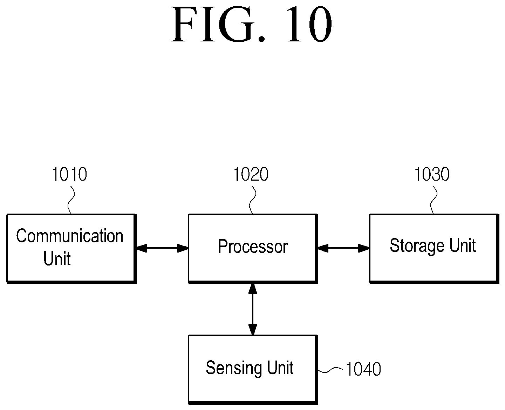

FIG. 10 is a diagram illustrating a configuration of a sensor device according to embodiments of the present disclosure.

Referring to FIG. 10, the sensor device may include a communication unit (1010), a processor (1020), a storage unit (1030), and a sensing unit (1040).

The communication unit (1010) may perform communication with an external entity, for example, a base station or another sensor device.

The processor (1020) may control overall operations of the sensor device according to the embodiments of the present disclosure, or may perform or control functional blocks. Specifically, the processor may control the sensing unit (1040) based on configuration information or control information received from the base station or another sensor device, and may sense the sensing information. The processor may transmit the collected sensing information through the communication unit (1010) to the base station or another sensor device. The detailed operations of the processor (1020) are the same as those described in the embodiments above, and thus the detailed description is omitted here.

Meanwhile, the processor (1020) may be configured in the form of a System-on-Chip (SoC). In connection with the embodiments of the present disclosure, the processor (1020) may include functional processors such as a CPU (Central Processor Unit) and an NPU (Neural Processor Unit). The CPU performs the brain function of the sensor device, processes operating systems and applications, and sensing-related tasks, and controls the operations of the components of the sensor device to maintain performance and power efficiency. The NPU accelerates artificial neural network computations and efficiently processes AI/ML (Artificial Intelligence/Machine Learning) operations. However, depending on the case, the CPU may also perform AI/ML learning and processing operations.

The storage unit (1030) may store information necessary for the operation of the sensor device, for example, configuration information and control information received from the base station, and sensing information collected by itself or received from another sensor device.

The sensing unit (1040) may collect various sensing information by performing sensing under the control of the processor (1020).

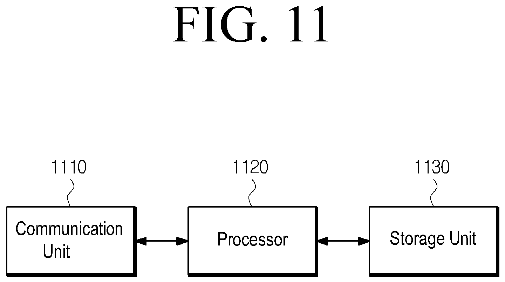

FIG. 11 is a diagram illustrating a configuration of a base station device according to embodiments of the present disclosure.

Referring to FIG. 11, the base station device includes a communication unit (1110), a processor (1120), and a storage unit (1130).

The communication unit (1110) may perform communication with an external entity, for example, a sensor device.

The processor (1120) may control overall operations of the sensor device according to the embodiments of the present disclosure, or may perform or control functional blocks. Specifically, the processor may generate configuration information or control information for controlling the sensing of the sensor devices, transmit it to the sensor devices, and may receive sensing information from the sensor devices. The detailed operations of the processor (1120) are the same as those described in the embodiments above, and thus the detailed description is omitted here.

Meanwhile, the processor (1120) may be configured in the form of a System-on-Chip (SoC). In connection with the embodiments of the present disclosure, the processor (1120) may include functional processors such as a CPU (Central Processor Unit) and an NPU (Neural Processor Unit). The CPU performs the brain function of the base station device, processes operating systems and various application tasks, and controls the operations of the components of the base station device to maintain performance and power efficiency. The NPU accelerates artificial neural network computations and efficiently processes AI/ML (Artificial Intelligence/Machine Learning) operations. However, depending on the case, the CPU may also perform AI/ML learning and processing operations.

The storage unit (1130) may store information necessary for the operation of the base station device, for example, various configuration and control information for the sensors, and sensing information received from the sensors.

Hereinafter, the operations of the base station device and the sensor device according to the embodiments of the present disclosure will be described.

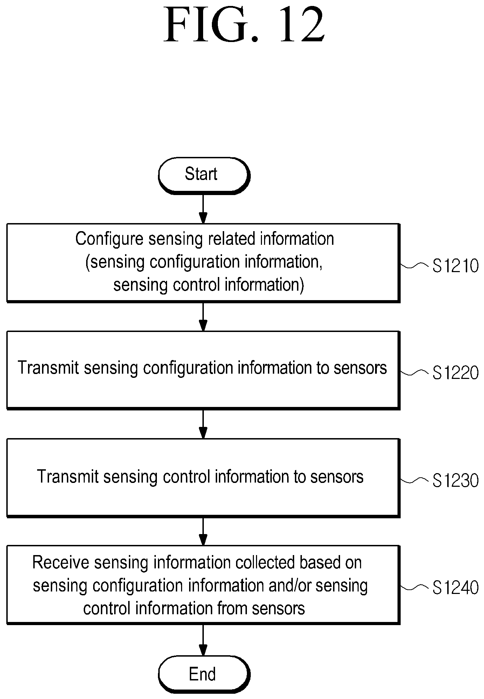

FIG. 12 is a diagram illustrating an operation of the base station device according to the first embodiment of the present disclosure.

Referring to FIG. 12, the base station device may configure sensing related information (S1210). The sensing related information includes sensing configuration information and sensing control information.

The base station device may transmit the sensing configuration information to the sensors (S1220). The sensing configuration information may be transmitted through system information or RRC messages.

The base station may transmit the sensing control information to the sensors (S1230). The sensing control information may be transmitted to the sensors through MAC CE or DCI or DSCI.

The base station may receive collected sensing information from the sensors based on the sensing configuration information and/or the sensing control information (S1240). The content of the sensing configuration information, the sensing control information, and the sensing control information is the same as those described in the first embodiment above, and thus the description is omitted here.

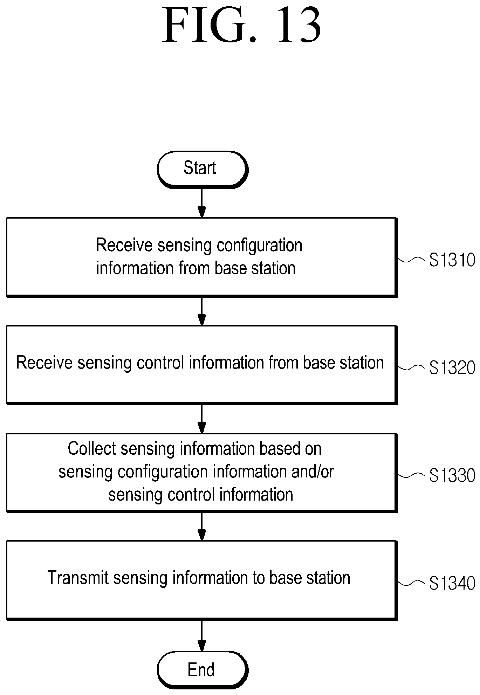

FIG. 13 is a diagram illustrating an operation of the sensor device according to the first embodiment of the present disclosure.

Referring to FIG. 13, the sensor device may receive sensing configuration information from the base station (S1310). The sensing configuration information may be received through system information or RRC messages.

The sensor device may receive sensing control information from the base station (S1320). The sensing control information may be received through MAC CE, DCI, or DSCI.

Thereafter, the sensor device may collect sensing information based on the sensing configuration information and/or the sensing control information (S1330). The sensor device may transmit the collected sensing information to the base station (S1340). The content of the sensing configuration information and the sensing control information is the same as those described in the first embodiment above, and thus the description is omitted here.

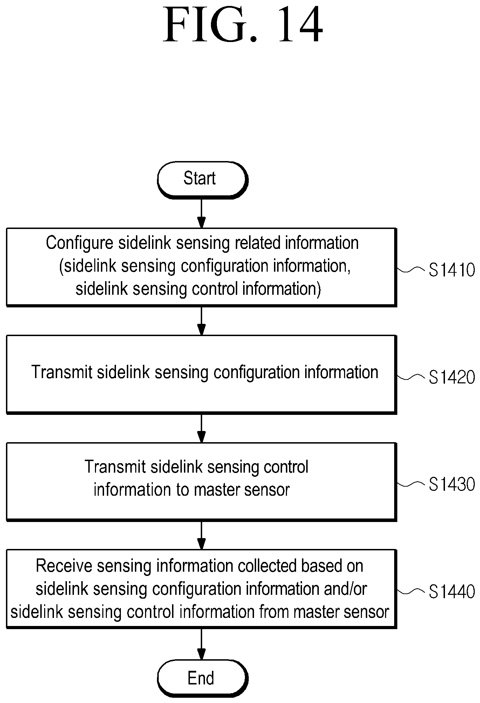

FIG. 14 is a diagram illustrating an operation of the base station device according to the second embodiment of the present disclosure.

Referring to FIG. 14, the base station device may configure sidelink sensing related information (S1410). The sidelink sensing related information includes sidelink sensing configuration information and sidelink sensing control information.

The base station device may transmit the sidelink sensing configuration information to the master sensor or directly to the slave sensors (S1420). That is, the sidelink sensing configuration information may be transmitted to the master sensor through RRC messages, or the sidelink sensing configuration information may also be transmitted as system information through broadcast directly to the slave sensors.

The base station may transmit the sidelink sensing control information to the master sensor (S1430). The sensing control information may be transmitted to the master sensor through MAC CE, DCI, or DSCI.

The base station may receive sensing information from the master sensor based on the sidelink sensing configuration information and/or the sidelink sensing control information (S1440). That is, the base station may receive sensing information collected by the slave sensors and transmitted to the master sensor from the master sensor.

The content of the sidelink sensing configuration information and the sidelink sensing control information is the same as those described in the second embodiment above, and thus the description is omitted here.

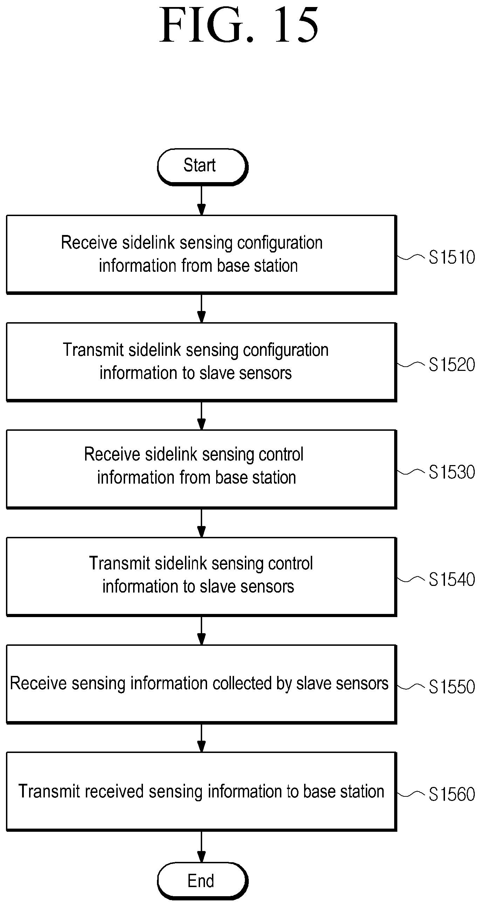

FIG. 15 is a diagram illustrating an operation of the master sensor device according to the second embodiment of the present disclosure.

Referring to FIG. 15, the master sensor may receive sidelink sensing configuration information from the base station or the master sensor (S1510). The sidelink sensing configuration information may be received through system information or RRC messages.

The master sensor may transmit the sidelink sensing configuration information to the slave sensors through system information or RRC messages (S1520).

The master sensor may receive sidelink sensing control information from the base station through DCI, DSCI, or MAC CE (S1530).

The master sensor may transmit the sidelink sensing control information to the slave sensors through SCI, SSCI, or MAC CE (S1540).

The master sensor may receive sensing information collected by the slave sensors based on the sidelink sensing configuration information and/or the sidelink sensing control information (S1550).

Thereafter, the master sensor may transmit the sensing information received from the slave sensors to the base station (S1560).

In steps S1520 and S1540 above, the sidelink sensing configuration information and the sidelink sensing control information that the master sensor transmits may be the same information received from the base station, or may be information newly generated by the master sensor. In the latter case, the master sensor may generate its own sidelink sensing configuration information and sidelink sensing control information based on the sidelink sensing configuration information and the sidelink sensing control information received from the base station and information of the slave sensors, and may transmit them to the slave sensors. At this time, the master sensor may transmit the newly generated sidelink sensing configuration information and sidelink sensing control information to the base station as well, so as to inform the base station that it has newly generated the information for the slave sensors.

Meanwhile, the content of the sidelink sensing configuration information and the sidelink sensing control information is the same as those described in the second embodiment above, and thus the description is omitted here.

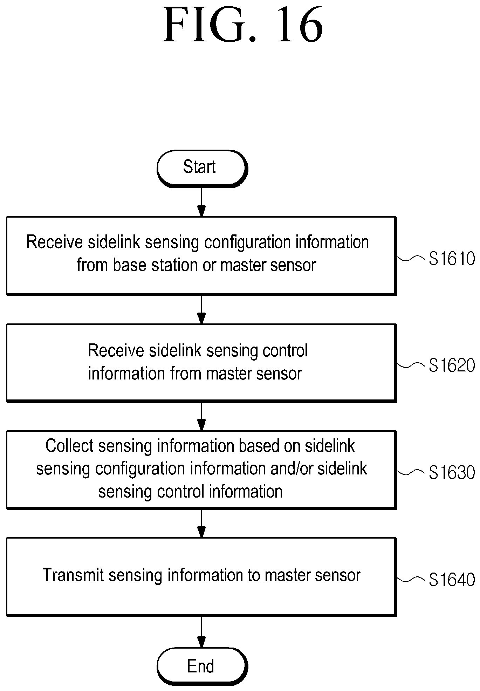

FIG. 16 is a diagram illustrating an operation of the slave sensor device according to the second embodiment of the present disclosure.

Referring to FIG. 16, the slave sensor device may receive sidelink sensing configuration information from the base station or the master sensor (S1610). The sidelink sensing configuration information may be received through system information or RRC messages. That is, the base station may directly transmit the sidelink sensing configuration information through broadcast of system information, or it may be received from the master sensor through system information or RRC messages.

The slave sensor device may receive sidelink sensing control information from the master sensor (S1620). The sidelink sensing control information may be received through MAC CE, SCI, or SSCI.

Thereafter, the sidelink sensor device may collect sensing information based on the sidelink sensing configuration information and/or the sidelink sensing control information (S1630).

The sidelink sensor device may transmit the collected sensing information to the master sensor (S1640). The content of the sidelink sensing configuration information and the sidelink sensing control information is the same as those described in the second embodiment above, and thus the description is omitted here.

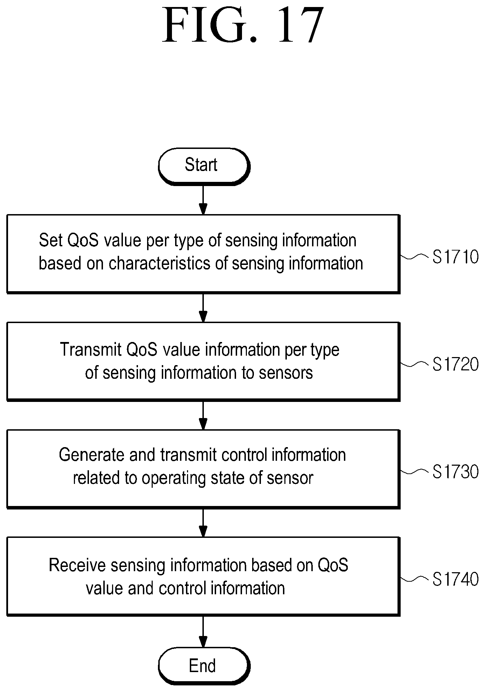

FIG. 17 is a diagram illustrating an operation of the base station device according to the third embodiment of the present disclosure.

The base station device may set a QoS value for each type of sensing information based on the characteristics of the sensing information (S1710).

The base station device may transmit the set QoS value information per type of sensing information to the sensors (S1720).

The base station device may generate control information about the operating state of the sensor and transmit it (S1730).

The base station device may receive sensing information from the sensors based on the QoS value and the control information (S1740).

The control information about the operating state of the sensor may include the operating state information of the sensor and the wake-up signal of the sensor. The operating state information indicates the operating state of the sensor, and may indicate one of the active state/idle state/inactive state, or indicate one of the active state/inactive state. The wake-up signal of the sensor is a signal that wakes up a sensor in the inactive state or idle state to indicate the execution of sensing operations.

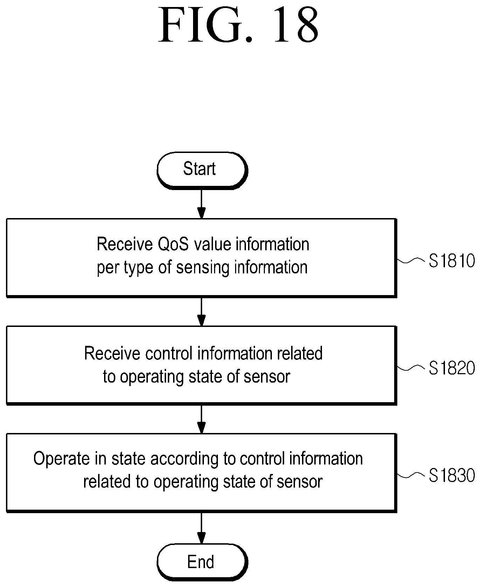

FIG. 18 is a diagram illustrating an operation of the sensor device according to the third embodiment of the present disclosure.

Referring to FIG. 18, the sensor device may receive the set QoS value information per type of sensing information from the base station (S1810). Also, the sensor may receive control information about the operating state of the sensor from the base station (S1820). The control information about the operating state of the sensor may include the operating state information of the sensor and the wake-up signal of the sensor. The operating state information indicates the operating state of the sensor, and may indicate one of the active state/idle state/inactive state, or indicate one of the active state/inactive state. The wake-up signal of the sensor is a signal that wakes up a sensor in the inactive state or idle state to indicate the execution of sensing operations.

The sensor device may operate according to the control information about the operating state of the sensor received from the base station in a different state (S1830). That is, the sensor may receive operating state information from the base station, and transition to one of the active state/idle state/inactive state, or one of the active state/inactive state. When the sensor device is in the idle state or the inactive state and receives a wake-up signal, it may transition to the active state and collect sensing information based on the QoS value received above, and transmit the collected sensing information to the base station. For example, the sensor may collect sensing information that it collects so that the sensing information satisfies the QoS value based on the priority, delay time, and packet loss rate set by the QoS value, and process and transmit it to the base station.

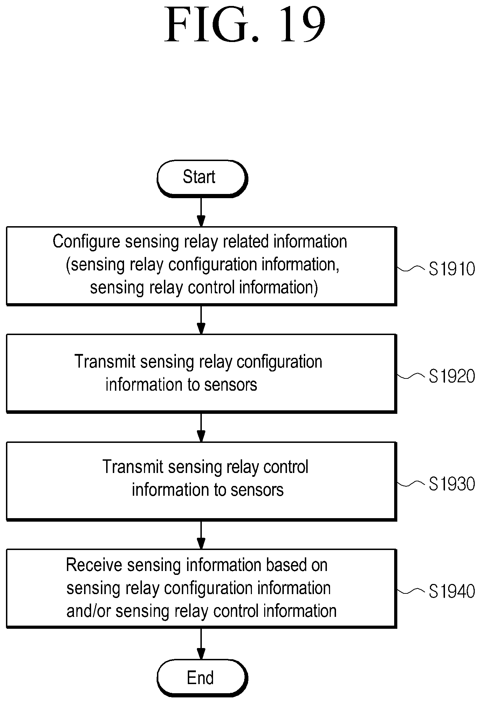

FIG. 19 is a diagram illustrating an operation of the base station device according to the fourth embodiment of the present disclosure.

Referring to FIG. 19, the base station device may configure sensing relay related information (S1910). The sensing relay related information includes sensing relay configuration information and sensing relay control information.

The base station device may transmit the sensing relay configuration information to the sensors (S1920). The sensing relay configuration information may be transmitted through system information or RRC messages to the sensors, or may be delivered to a terminal sensor through the relay function of the sensors through connection between sensors (e.g., sidelink).

The base station device may transmit the sensing relay control information to the sensors (S1930). The sensing relay control information may be transmitted through MAC CE and DCI or DSCI between the base station and the sensor, and through MAC CE and SCI or SSCI between the sensors.

The base station may receive sensing information based on the sensing relay configuration information and/or the sensing relay control information (S1940). At this time, the sensing information collected by the sensors may be delivered to the base station through multi-hop relay between the sensors.

Meanwhile, the content of the sensing relay configuration information and the sensing relay control information is the same as those described in the fourth embodiment above, and thus the description is omitted here.

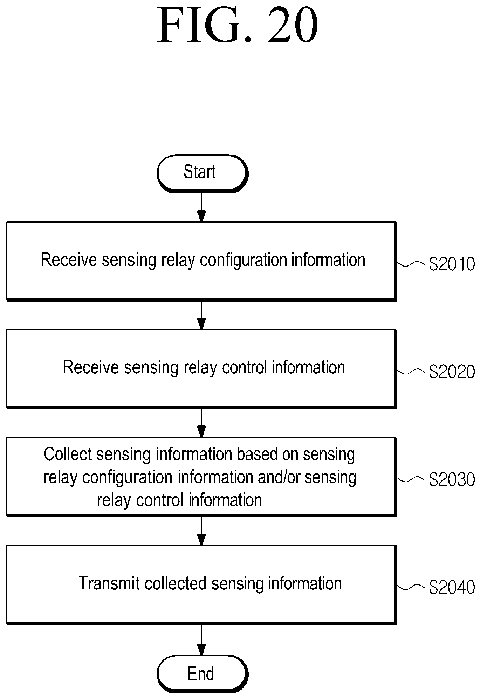

FIG. 20 is a diagram illustrating an operation of the sensor device according to the fourth embodiment of the present disclosure.

Referring to FIG. 20, the sensor device may receive sensing relay configuration information from the base station or another sensor (S2010). The sensing relay configuration information may be received through system information or RRC messages, or may be received through connection with another sensor (e.g., sidelink).

Also, the sensor device may receive sensing relay control information (S2020). The sensor device may receive the sensing relay control information from the base station through MAC CE, DCI, or DSCI, or may receive it from another sensor through MAC CE, SCI, or SSCI.

The sensor device may collect sensing information based on the sensing relay configuration information and/or the sensing relay control information (S2030).

Thereafter, the sensor device may transmit the sensing information to another sensor or the base station (S2040). That is, the sensor device may transmit the sensing information it collected or sensing information received from another sensor to another sensor or the base station. For example, if the sensor device is a terminal sensor, it may transmit the sensing information it collected to a neighboring sensor. If the sensor device is a sensor between a terminal sensor and the base station, it may transmit sensing information received from another sensor and/or the sensing information it collected to the base station or another sensor. If the sensor device is directly adjacent to the base station, it may transmit the sensing information it collected and/or the sensing information received from a neighboring sensor to the base station.

Meanwhile, the content of the sensing relay configuration information and the sensing relay control information is the same as those described in the fourth embodiment above, and thus the description is omitted here.

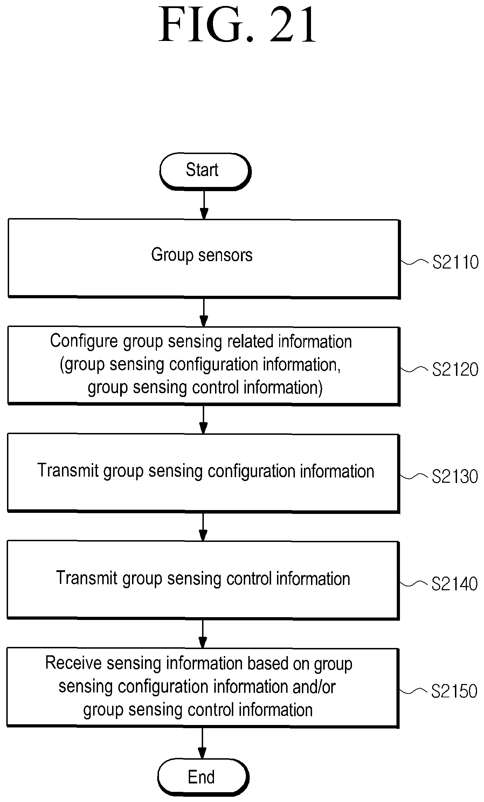

FIG. 21 is a diagram illustrating an operation of the base station device according to the fifth embodiment of the present disclosure.

The base station device may group the sensors within the cell according to certain criteria (S2110). Here, the base station may group the sensors considering various criteria such as the location of the sensors, function, capability, or operating time of the sensors, and the importance of the sensing information and the required QoS.

The base station device may configure group sensing related information for sensing and control of the grouped sensors (S2120). The group sensing related information includes group sensing configuration information and group sensing control information.

The base station device may transmit the configured group sensing configuration information to the sensors (S2130). The group sensing information may include the group IDs of the set sensor groups, and may be transmitted to the sensors through system information or RRC messages.

The base station device may transmit the configured group sensing control information to the sensors (S2140). The group sensing control information may be delivered to the sensors through MAC CE, DCI, or DSCI. However, between sensors, it may be delivered through MAC CE, SCI, or SSCI. The group sensing control information may include information indicating activation or deactivation of the sensor group. When the information indicating activation or deactivation of the sensor group is delivered to the sensors having the group ID, the sensors having the group ID may be activated or deactivated.

The base station device may receive sensing information based on the sensing from at least one of the sensor groups of sensor devices (S2150).

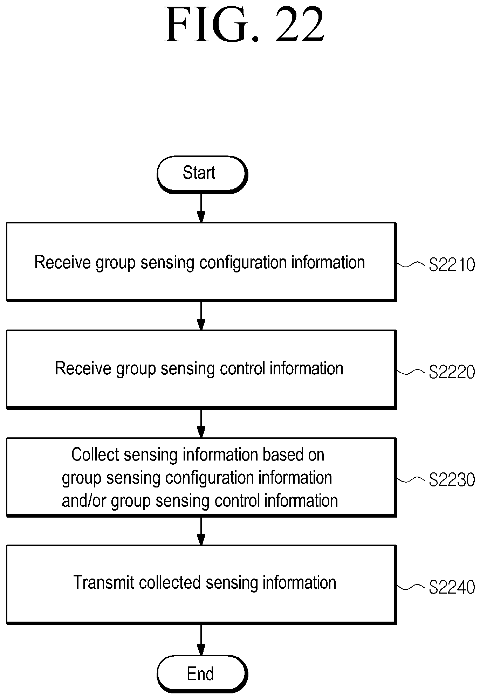

FIG. 22 is a diagram illustrating an operation of the sensor device according to the fifth embodiment of the present disclosure.

The sensor device may receive group sensing configuration information related to the sensor group grouped by the base station (S2210). The group sensing information may include the group IDs of the sensor groups set by the base station, and may be received through system information or RRC messages.

The sensor device may receive group sensing control information from the base station (S2220). The group sensing control information may be received through MAC CE, DCI, or DSCI. However, when received from another sensor, it may be received through MAC CE, SCI, or SSCI. The group sensing control information may include information indicating activation or deactivation of the sensor group. When the information indicating activation or deactivation of the sensor group is delivered to the sensors having the group ID, the sensors having the group ID may be activated or deactivated.

The sensor device may collect sensing information based on the group sensing configuration information and/or the group sensing control information (S2230), and may transmit it to the base station (S2240).

The methods proposed in the present specification may be performed by an apparatus configured to include at least one computer readable recording medium including instructions to be executed by at least one processor, and one or more processors connected operably to the at least one computer readable recording medium, and the one or more processors may execute the methods proposed in the present specification by executing the instructions, in addition to the communication devices described above. That is, the methods proposed in the present specification may also be performed by an apparatus configured to control the communication devices.

The claims described in the present specification may be combined in various ways. For example, the technical features of the method claims of the present specification may be combined and implemented as a device, and the technical features of the device claims of the present specification may be combined and implemented as a method. Also, the technical features of the method claims and the device claims of the present specification may be combined and implemented as a device, and the technical features of the method claims and the device claims of the present specification may be combined and implemented as a method.

## Claims

1. An operating method of an electronic device for controlling a sensor in a wireless communication system, the method comprising:
transmitting sensing configuration information to at least one sensor;
transmitting sensing control information to the at least one sensor; and
receiving sensing information collected based on the sensing configuration information and the sensing control information from the at least one sensor.

2. An operating method of an electronic device for controlling an operating state of a sensor in a wireless communication system, the method comprising:
transmitting quality of service value information per type of sensing information to at least one sensor;
transmitting control information related to an operating state to the at least one sensor; and
receiving sensing information from the at least one sensor based on the quality of service value information and the control information related to the operating state.

3. An operating method of an electronic device for controlling a sensor in a wireless communication system, the method comprising:
transmitting sensing relay configuration information to at least one sensor;
transmitting sensing relay control information to the at least one sensor; and
receiving sensing information from at least one sensor based on at least one of the sensing relay configuration information and the sensing relay control information.

4. An operating method of an electronic device for controlling a sensor in a wireless communication system, the method comprising:
configuring at least one sensor group including at least one sensor;
generating group sensing related information for sensing of the configured sensor group; and
transmitting the generated group sensing related information to at least one sensor within the sensor group.
